# EUROPEAN PATENT APPLICATION

(11) **EP 4 818 217 A1**
(43) Date of publication of application: **07.10.2026**
(21) Application number: 24897317.4
(22) Date of filing: 14.11.2024
(51) Int. Cl.: C08F 20/20, B32B 27/30, C08F 2/44, C08F 20/28, C08F 290/06, C09K 9/02, G02B 1/04, G02B 3/00, G02B 5/23, G02C 7/00, G02C 7/10

(54) **CURABLE COMPOSITION, CURED BODY, LAMINATE, OPTICAL ARTICLE, LENS, AND GLASSES**

(30) Priority: 27.11.2023 JP 2023200192; 01.12.2023 JP 2023203799
(71) Applicant: TOKUYAMA CORPORATION, Yamaguchi 745-8648 (JP)
(72) Inventor: MIYAZAKI Masayuki, Shunan-shi, Yamaguchi 745-8648 (JP); HIRAREN Toshimitsu, Shunan-shi, Yamaguchi 745-8648 (JP)
(74) Representative: Kraus & Lederer PartGmbB
(86) International application number: PCT/JP2024/040480
(87) International publication number: WO 2025/115630

(57) **Abstract**

The present disclosure provides a curable composition that can be used to achieve a cured body excelling in functional dye performance and hardness. The present disclosure also provides a cured body, a laminate, an optical article, a lens, and glasses. One embodiment of the present invention provides a curable composition. The curable composition contains a first radically polymerizable monomer represented by formula (1) and a functional dye. In formula (1), R¹ and R³ each independently represent a monovalent group represented by formula (2), a2 is 1 or a number from 2 to 10, inclusive, R²⁰⁰ is a hydrogen atom or a methyl group, and when a2 is 1, R² is a monovalent group represented by formula (2), and when a2 is from 2 to 10, inclusive, R² is a monovalent group represented by formula (2) or a hydrogen atom, and at least one of the plurality of R² is a monovalent group represented by formula (2). The plurality of monovalent groups represented by formula (2) may be mutually the same or different.

## Description

### TECHNICAL FIELD

The present invention relates to a curable composition, a cured product, a laminate, an optical article, a lens, and eyeglasses.

### BACKGROUND ART

Photochromic compounds represented by a naphthopyran compound, a fulgide compound, a spirooxazine compound, or the like are compounds capable of reversibly taking two isomers each having a different absorption spectrum when irradiated with light including ultraviolet rays such as sunlight or light of a mercury lamp. In general, the photochromic compounds have characteristics (hereinafter, referred to as photochromic properties) in which a compound in a colorless decolored state quickly changes in color when irradiated with ultraviolet rays and is isomerized (color development reaction) to a colored color development state and returns to the original color when the light irradiation is stopped and the compound is placed in a dark place. These compounds are used for various applications, particularly for optical materials, utilizing the characteristics.

For example, a photochromic eyeglass lens imparted with the photochromic properties by the use of a photochromic compound is quickly colored and functions as a sunglass lens in the outdoors where light including ultraviolet rays such as sunlight are radiated. In the indoors where such light is not radiated, the color fades and the lens functions as an ordinary transparent eyeglass lens. Demand for the photochromic eyeglass lenses has increased in recent years.

As a specific method for imparting photochromic properties to an optical material, there is known a coating method, in which a photochromic curable composition is applied onto a plastic lens by spin coating or the like and is then photocured to form a photochromic coating layer. The photochromic curable composition includes, for example, multiple types of (meth)acrylates and urethane oligomers.

### Citation List

### Patent Documents

Patent Document 1: PCT International Publication No. WO 98/37115
Patent Document 2: US Patent No. 5914174
Patent Document 3: PCT International Publication No. WO 01/02449
Patent Document 4: PCT International Publication No. WO 03/11967
Patent Document 5: PCT International Publication No. WO 2015/054036
Patent Document 6: PCT International Publication No. WO 2009/075388

### DISCLOSURE OF THE INVENTION

### Problems to be Solved by the Invention

An object of the present invention is to provide a curable composition capable of producing a cured product having excellent functional dye performance and hardness, a cured product, a laminate, an optical article, a lens, and eyeglasses.

### Means for Solving the Problems

According to the present disclosure, a curable composition is provided. The curable composition includes a first radically polymerizable monomer represented by the following formula (1) and a functional dye:

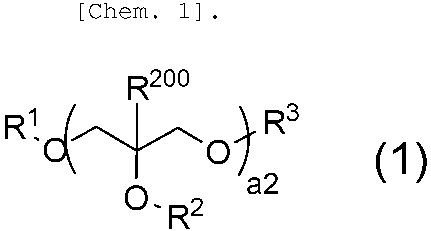

In the formula (1), R¹ and R³ each independently represent a monovalent group represented by the following formula (2), a2 is 1, or a number of 2 or more and 10 or less, R²⁰⁰ is a hydrogen atom or a methyl group. When a2 is 1, R² is a monovalent group represented by the following formula (2) and when a2 is 2 or more and 10 or less, R² is each a monovalent group represented by the following formula (2) or a hydrogen atom. At least one of the plurality of R² is a monovalent group represented by the following formula (2), and the plurality of monovalent groups represented by the following formula (2) may be the same as or different from each other:

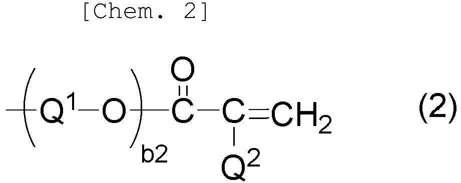

In the formula (2), Q¹ is a linear or branched alkylene group having 1 or more and 6 or less carbon atoms, Q² is a hydrogen atom or a methyl group, and b2 is 0, or 1 or more and 15 or less.

According to the present disclosure, a cured product is provided. The cured product is obtained by curing the curable composition according to the embodiment.

According to the present disclosure, a laminate is provided. The laminate includes an optical substrate and the cured product according to the embodiment located on a surface of the optical substrate.

According to the present disclosure, a lens is provided. The lens includes a lens substrate and the cured product according to the embodiment located on a surface of the optical substrate.

According to the present disclosure, eyeglasses are provided. The eyeglasses include the lens according to the embodiment.

### Effects of the Invention

The present invention can provide a curable composition capable of producing a cured product having excellent functional dye performance and hardness, a cured product, a laminate, an optical article, a lens, and eyeglasses.

### BRIEF DESCRIPTION OF THE DRAWINGS

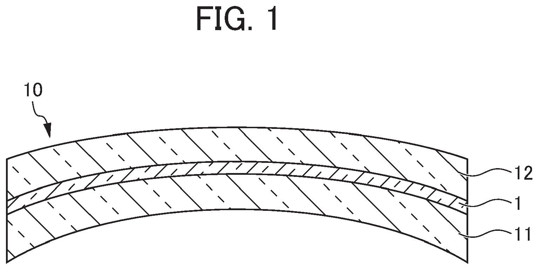

[FIG. 1] FIG. 1 is a cross-sectional view schematically showing an example of a laminate according to an embodiment.

### PREFERRED MODE FOR CARRYING OUT THE INVENTION

The curable composition according to the embodiment includes a first radically polymerizable monomer and a functional dye. The first radically polymerizable monomer is a compound having a structure represented by the following formula (1). The first radically polymerizable monomer is, for example, a glycerin-derived structure-containing tri(meth)acrylate. Use of such a curable composition can produce a cured product having excellent functional dye performance. Although the reason for this is not clearly elucidated, the present inventors speculate as follows.

First, functional dyes such as photochromic compounds include a compound which is structurally changed by energy of light or the like and develops color, decolors, or changes color. In order for such functional dyes to readily undergo structural changes in the polymeric solid matrix, it is important that the functional dyes be disposed within soft segments in the polymeric solid matrix. In order to increase the proportion of soft segments in the cured product, it is useful to increase the proportion of a di(meth)acrylate in the curable composition. However, if the proportion of the di(meth)acrylate is excessively high, the curability of the polymer solid matrix may be reduced because the number of crosslinking points is reduced. Therefore, a curable composition to which a polyfunctional radically polymerizable monomer with 3 or more functional groups has been further added is used in some cases. For example, by adding a polyfunctional radically polymerizable monomer having a relatively low molecular weight such as trimethylolpropane trimethacrylate (TMPT), the number of crosslinking points is increased, and the curability and hardness of the polymer solid matrix are improved. However, in this cured product, although the functional dye can exist in the space around the crosslinking point, particularly in the space around the crosslinking point where the polyfunctional radically polymerizable monomers have reacted with each other, the space is not sufficiently large for the functional dye to change its structure, and therefore, the functional dye performance may be deteriorated.

The curable composition according to the embodiment includes a compound having a structure represented by the following formula (1) as the first radically polymerizable monomer. Such a compound is, for example, a polyfunctional (meth)acrylate with 3 or more functional groups having, for example, a glycerin-derived structure. The (poly)glycerin structure has a smaller distance between (meth)acrylate groups than polyfunctional radically polymerizable monomers such as TMPT. Therefore, it is considered that the space in the vicinity of the crosslinking point, particularly the space formed by the reaction between the first radically polymerizable monomers is further reduced, and the functional dye is unlikely to exist in the vicinity of the crosslinking point. As a result, the proportion of the functional dye that can exist in the vicinity of the crosslinking point decreases and the proportion of the functional dye existing in the soft segment increases, whereby the functional dye performance is less likely to be reduced, enhancing the functional dye performance in the cured product.

Furthermore, since the first radically polymerizable monomer has a high (meth)acryloyl group concentration per molecule, the number of crosslinking points may increase. As a result, the hardness of the cured product can be increased. Therefore, both the functional dye performance in the cured product and the hardness can be achieved.

Hereinafter, each component will be described in detail.

### <(A) Radically Polymerizable Monomer>

A radically polymerizable monomer (A) includes a component (A-1), that is, the first radically polymerizable monomer represented by the formula (1). Hereinafter, the first radically polymerizable monomer represented by the formula (1) is also referred to as the component (A-1). The radically polymerizable monomer (A) is also referred to as a component (A). The radically polymerizable monomer (A) may include another radically polymerizable monomer depending on the desired properties of the cured product.

The other radically polymerizable monomer is not particularly limited as long as it is a polymerizable monomer capable of polymerizing with the component (A-1), and known monomers can be used. However, a radically polymerizable monomer having a (meth)acryloyl group is preferred, and the following can be preferably used: a component (A-2), that is, a radically polymerizable monomer having two (meth)acryloyl groups in one molecule; a component (A-3), that is, a radically polymerizable monomer having 3 or more (meth)acryloyl groups in one molecule other than the component (A-1), and a component (A-4), that is, other radically polymerizable monomers having a (meth) acryloyl group.

### <Component (A-1): First Radically Polymerizable Monomer>

The first radically polymerizable monomer is a polyfunctional (meth)acrylate compound represented by the following formula (1):

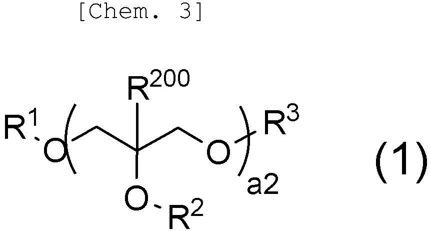

In the formula (1), R¹ and R³ each independently represent a monovalent group represented by the following formula (2). R² represents a monovalent group represented by the following formula (2) or a hydrogen atom. At least one of a plurality of R² represents a monovalent group represented by the following formula (2).
a2 is 1, or a number of 2 or more and 10 or less. R²⁰⁰ represents a hydrogen atom or a methyl group:

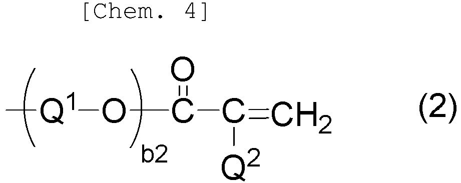

In the formula (2), Q¹ represents a linear or branched alkylene group having 1 or more and 6 or less carbon atoms. Q¹ preferably presents a linear alkylene group having 1 or more and 6 or less carbon atoms, and more preferably a linear alkylene group having 2 or more and 4 or less carbon atoms, from the viewpoint of ensuring both the functional dye performance and the hardness.
b2 is 0, or 1 or more and 15 or less. From the viewpoint of ensuring both the functional dye performance and the hardness, b2 is preferably 12 or less, more preferably 10 or less, and most preferably 8 or less. Q² is a hydrogen atom or a methyl group. That is, the component (A-1) may be a compound having only an acryloyl group(s), a compound having only a methacryloyl group(s), or a compound having functional groups of both a methacryloyl group and an acryloyl group, as represented by the above formula (1). The use of the component (A-1) having a high proportion of the methacryloyl group tends to yield a cured product having a high color density of the photochromic dye and excellent repetitive durability. The use of the component (A-1) having a high proportion of the methacryloyl group tends to yield a cured product having excellent hardness. Q² is preferably a methyl group. When a2 is 1, R² is a monovalent group represented by the above formula (2). That is, when a2 is 1, the first radically polymerizable monomer includes a monoglycerin-based (meth)acrylate compound represented by the following formula (1a) (hereinafter, referred to as a first monoglycerin-based radically polymerizable monomer):

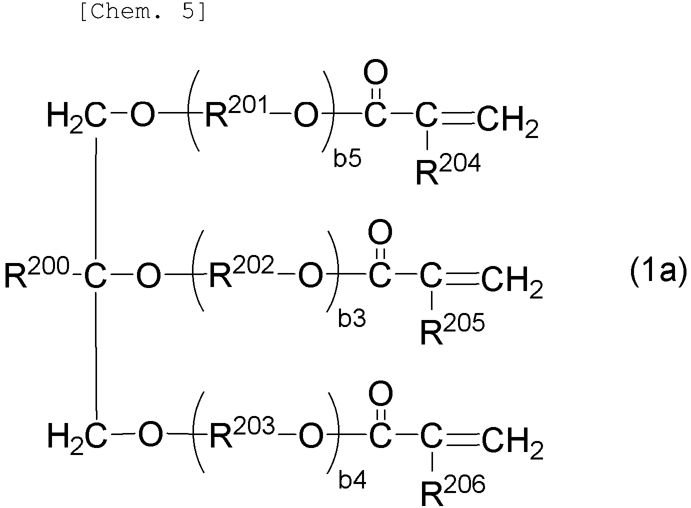

In the formula (1a), R²⁰⁰ represents a hydrogen atom or a methyl group. From the viewpoint of availability and ensuring both the performance and the hardness, a hydrogen atom is preferable.

R²⁰¹, R²⁰², and R²⁰³ each independently represent a linear or branched alkylene group having 1 or more and 6 or less carbon atoms. From the viewpoint of ensuring both the functional dye performance and the hardness, a linear alkylene group having 1 or more and 6 or less carbon atoms is preferable, and a linear alkylene group having 2 or more and 4 or less carbon atoms is preferable. R2^{01,} R²⁰² and R²⁰³ may have the same structure or different structures.

b3, b4, and b5 are each independently represent 0, or 1 or more and 4 or less. From the viewpoint of ensuring both the functional dye performance and the hardness, b3, b4, and b5 are each preferably 3 or less, preferably 2 or less, and most preferably 0.

R²⁰⁴, R²⁰⁵, and R²⁰⁶ represent a hydrogen atom or a methyl group. That is, the component (A-1) may be triacrylate, trimethacrylate, dimethacrylate acrylate, or diacrylate methacrylate represented by the above formula (1a). The use of the component (A-1) having a high proportion of the methacrylate group tends to yield a cured product having a high color density of the photochromic dye and excellent repetitive durability.

From the viewpoint of ensuring both the performance and the hardness, the number average molecular weight of the first monoglycerin-based radically polymerizable monomer represented by the formula (1a) is preferably less than 850, more preferably 600 or less, still more preferably 530 or less, still more preferably 460 or less, and particularly preferably 390 or less. The lower limit of the number average molecular weight of the first monoglycerin-based radically polymerizable monomer is, for example, 254 or more, and according to another example, 296 or more. The number average molecular weight can be measured by, for example, gel filtration chromatography (GPC) or a mass spectrometer.

Examples of the first monoglycerin-based radically polymerizable monomer represented by the above formula (1a) include glycerin trimethacrylate, glycerin triacrylate, glycerin dimethacrylate monoacrylate, glycerin diacrylate monomethacrylate, ethoxylated glycerin trimethacrylate, propoxylated glycerin trimethacrylate, butoxylated glycerin trimethacrylate, ethoxylated glycerin triacrylate, propoxylated glycerin triacrylate and butoxylated glycerin triacrylate.

The first monoglycerin-based radically polymerizable monomer preferably includes at least one selected from the group consisting of glycerin trimethacrylate, glycerin triacrylate, and ethoxylated glycerin trimethacrylate.

The glycerin trimethacrylate is represented by the following formula (1-1A):

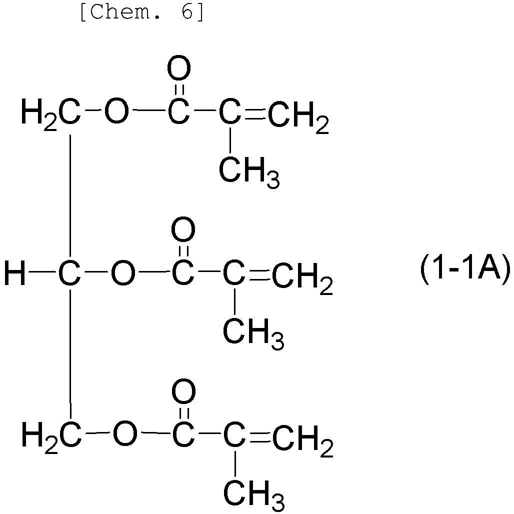

The glycerin triacrylate is represented by the following formula (1-2A):

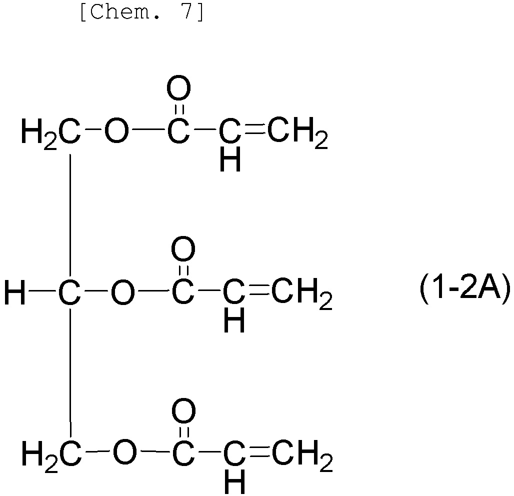

The ethoxylated glycerin trimethacrylate is represented by the following formula (1-3A):

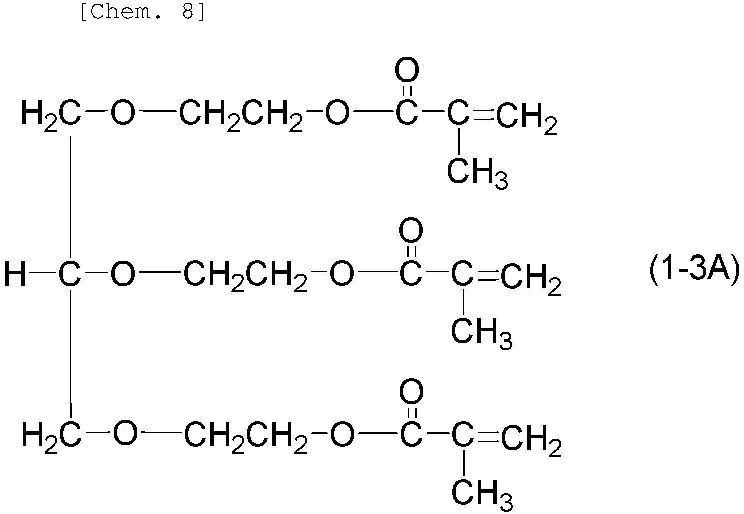

When a2 in the formula (1) is 2 or more and 10 or less, R² represents a monovalent group represented by the formula (2) or a hydrogen atom. At least one of the plurality of R² is a monovalent group represented by the above formula (2). The plurality of monovalent groups represented by the above formula (2) may be the same as or different from each other. From the viewpoint of obtaining a cured product having a higher hardness, R² is preferably a monovalent group represented by the above formula (2). From the viewpoint of easy availability and ensuring both the functional dye performance and the hardness, a2 is preferably 2 or more and 8 or less, more preferably 2 or more and 6 or less, and most preferably 2 or more and 4 or less.

In other words, when a2 in the formula (1) is 2 or more and 10 or less, the first radically polymerizable monomer is a polyglycerin-based polyfunctional (meth)acrylate. From the viewpoint of ensuring both the performance and the hardness and easy handling viscosity, a number average molecular weight of the first polyglycerin-based radically polymerizable monomer is preferably less than 3,000, preferably 2,500 or less, more preferably 2,000 or less, still more preferably 1,700 or less, and particularly preferably 1,500 or less. The lower limit of the number average molecular weight of the first polyglycerin-based radically polymerizable monomer is 380 or more, for example, and 430 or more according to another example. The number average molecular weight can be measured by, for example, gel filtration chromatography (GPC) or a mass spectrometer.

Examples of the first polyglycerin-based radically polymerizable monomer represented by the above formula (1) include diglycerin trimethacrylate, diglycerin triacrylate, diglycerin tetramethacrylate, diglycerin tetraacrylate, diglycerin dimethacrylate diacrylate, triglycerin pentaacrylate, triglycerin pentamethacrylate, triglycerin tetraacrylate, triglycerin tetramethacrylate, tetraglycerin hexamethacrylate, tetraglycerin hexaacrylate, tetraglycerin pentamethacrylate, tetraglycerin pentaacrylate, ethoxylated tetraglycerin hexamethacrylate, propoxylated tetraglycerin hexamethacrylate, butoxylated tetraglycerin hexamethacrylate, ethoxylated tetraglycerin hexaacrylate, propoxylated tetraglycerin hexaacrylate, butoxylated tetraglycerin hexaacrylate, ethoxylated triglycerin pentamethacrylate, propoxylated triglycerin pentamethacrylate, butoxylated triglycerin pentamethacrylate, ethoxylated triglycerin pentaacrylate, propoxylated triglycerin pentaacrylate, butoxylated triglycerin pentaacrylate, ethoxylated diglycerin tetramethacrylate, propoxylated diglycerin tetramethacrylate, butoxylated diglycerin tetramethacrylate, ethoxylated diglycerin tetraacrylate, propoxylated diglycerin tetraacrylate, and butoxylated diglycerin tetraacrylate.

The first polyglycerin-based radically polymerizable monomer preferably includes at least one selected from the group consisting of diglycerin tetraacrylate, diglycerin tetramethacrylate, ethoxylated diglycerin tetraacrylate, ethoxylated diglycerin tetramethacrylate, triglycerin tetramethacrylate, and triglycerin pentamethacrylate.

Glycerin tetramethacrylate is represented by the following formula (1-1):

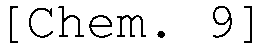

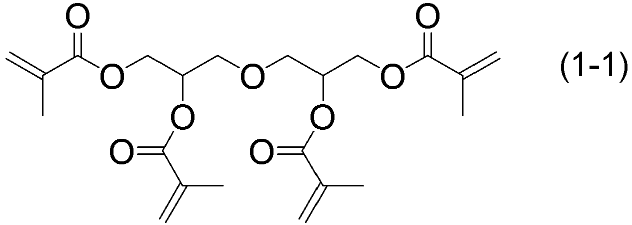

Ethoxylated glycerin tetramethacrylate is represented by the following formula (1-2):

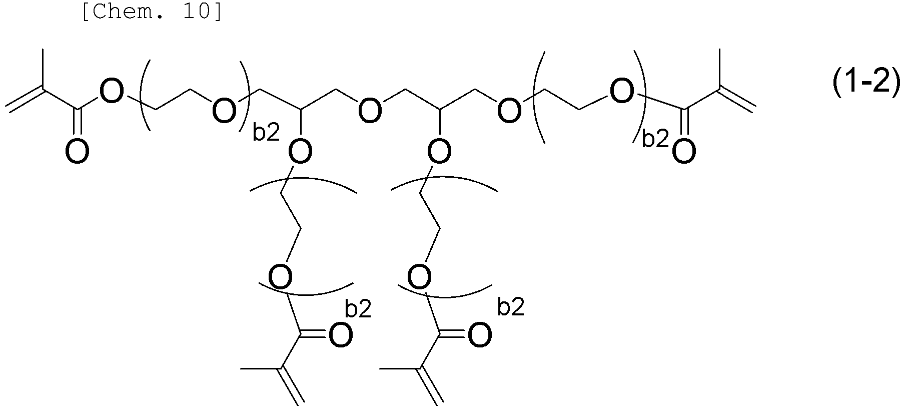

Triglycerin tetramethacrylate is represented by the following formula (1-3):

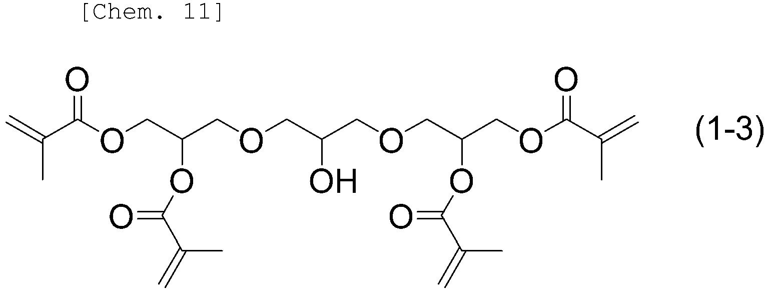

Triglycerin pentamethacrylate is represented by the following formula (1-4).

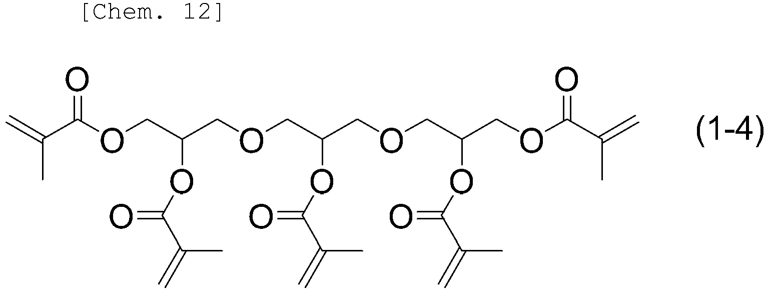

The first radically polymerizable monomer may be a mixture of a trifunctional monoglycerin-based (meth)acrylate in which a2 in the formula (1) is 1 and a polyfunctional polyglycerin-based (meth)acrylate in which a2 is 2 or more.

### <Component (A-2): Second Radically Polymerizable Monomer having Two (Meth)acryloyl Groups in One Molecule>

The curable composition according to the embodiment preferably further includes the component (A-2): the second radically polymerizable monomer having two (meth)acryloyl groups in one molecule. Inclusion of the component (A-2) tends to yield a cured product having high functional dye performance.

The component (A-2) preferably has one or more methacryloyl groups, and more preferably two methacryloyl groups. Having a methacryloyl group tends to suppress the functional dye from degrading, enhancing the appearance of the cured product.

The component (A-2) preferably includes an alkylene oxide chain. Use of such a component (A-2) tends to enhance the performance of the cured product. In particular, it is preferable to use a second radically polymerizable monomer having at least one polyalkylene glycol chain structure having a number average molecular weight of 250 or more. The alkylene oxide chain preferably has 1 or more and 10 or less carbon atoms, and more preferably 2 or more and 5 or less carbon atoms. Proportion N2/N1, a proportion of number average molecular weight N2 of the alkylene oxide chain to number average molecular weight N1 of the component (A-2), is preferably 50% or more, more preferably 60% or more, and still more preferably 80% or more. This proportion may be 95% or less, or 90% or less.

In consideration of ensuring both the functional dye performance and the hardness as well as the viscosity of the curable composition to be obtained, the number average molecular weight of the component (A-2) is preferably 350 or more and 9,000 or less, more preferably 400 or more and 7,000 or less, still more preferably 500 or more and 6,000 or less, and most preferably 600 or more and 3,500 or less. The number average molecular weight of the component (A-2) may be 400 or more and 3,500 or less, and may be 600 or more and 2,500 or less. The number average molecular weight can be measured, for example, by gel filtration chromatography (GPC).

The second radically polymerizable monomer may include at least one structure selected from the group consisting of an ester bond, a urethane bond, a urea bond, a carbonate bond, and a carbonyl group. The second radically polymerizable monomer preferably does not include at least one structure selected from the group consisting of an ester bond, a urethane bond, a urea bond, a carbonate bond, and a carbonyl group.

The second radically polymerizable monomer preferably includes a di(meth)acrylate represented by the following formula (3):

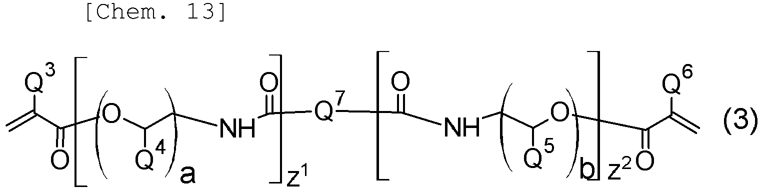

In the formula (3), Q³ and Q⁶ each independently represent a hydrogen atom or a methyl group. That is, the second radically polymerizable monomer may be a diacrylate, a dimethacrylate, or a methacrylate acrylate. Q³ and Q⁶ are preferably methyl groups.

Q⁴ and Q⁵ each independently represent a hydrogen atom or an alkyl group having 1 or more and 3 or less carbon atoms. Q⁴ and Q⁵ each independently preferably present a hydrogen atom or a methyl group, and particularly preferably a hydrogen atom.

a and b are each independently 0 or more and 10 or less. a and b are preferably 0 or more and 5 or less, more preferably 0 or more and 3 or less, and particularly preferably 0 or more and 2 or less.

Z¹ and Z² are each independently 0 or 1, and preferably 0 from the viewpoint of having easily handled viscosity.

Q⁷ is a divalent group having a number average molecular weight of 250 or more represented by the following formula (3a):

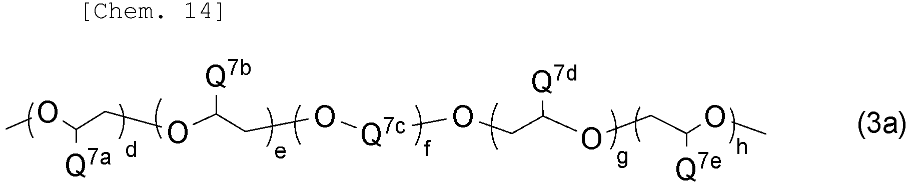

Q^{7a}, Q^{7b}, Q^{7d}, and Q^{7e} in the formula (3a) each independently represent a hydrogen atom or an alkyl group having 1 or more and 3 or less carbon atoms. Q^{7a}, Q^{7b}, Q^{7d}, and Q^{7e} each independently preferably represent a hydrogen atom or a methyl group. Q^{7a} and Q^{7b} are different groups from each other. Q7^{d} and Q^{7e} are different groups from each other. Q7^{a} and Q^{7e} may be the same group. Q7^{b} and Q^{7d} may be the same group.

Q^{7c} represents a linear or branched alkylene group having 2 or more and 20 or less carbon atoms which may have a substituent and f is 3 or more and 100 or less.

A repeating unit -(OQ^{7c})- with a subscript f is the first alkylene oxide unit. The polymer moiety constituted by this repeating unit may form a soft segment in the cured product. Q^{7c} is preferably a linear alkylene group. The alkylene group preferably has 3 or more and 10 or less carbon atoms, more preferably 3 or more and 6 or less carbon atoms, and particularly preferably 3 or more and 4 or less carbon atoms. When the number of carbon atoms of the alkylene group is large, the performance of the cured product is further enhanced. On the other hand, when the number of carbon atoms of the alkylene group is too large, the amount of the soft segment per unit mass decreases, and thus the performance of the cured product may decrease.

From the viewpoint of ensuring both the performance and the hardness, f is preferably from 6 to 85, inclusive, more preferably from 7 to 60, inclusive, still more preferably from 8 to 45, inclusive, and particularly preferably from 9 to 30, inclusive.

d and h are from 0 to 10, inclusive. From the viewpoint of ensuring both the performance and the hardness, d and h are preferably from 0 to 5, inclusive, more preferably from 0 to 2, inclusive, still more preferably 0 or 1, and most preferably 0.

e and g are from 0 to 20, inclusive. From the viewpoint of ensuring both the performance and the hardness, e and g are preferably from 0 to 15, inclusive, more preferably from 0 to 10, inclusive, still more preferably from 0 to 5, inclusive, and particularly preferably 0.

In other words, the di(meth)acrylate represented by the formula (3) may be a monomer further including at least one of a second alkylene oxide unit, which is a repeating unit with subscripts e and g, and a third alkylene oxide unit, which is a repeating unit with subscripts d and h.

In the di(meth)acrylate represented by the formula (3), Z¹ and Z² are preferably 0. Such a compound is represented by the following formula (3b):

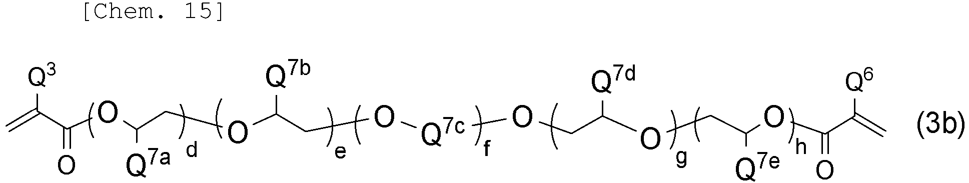

In the formula (3b), Q³ and Q⁶ represent a hydrogen atom or a methyl group. Q^{7a}, Q^{7b}, Q^{7c}, Q^{7d}, Q^{7e}, d, e, f, g, and h are as defined in the formula (3a).

In the di(meth)acrylate represented by the formula (3b), d, e, g and h are preferably 0. In other words, the di(meth)acrylate preferably includes the first alkylene oxide unit alone. The use of such a di(meth)acrylate represented by the formula (3b) tends to increase the hardness of the cured product. Such a compound is represented by the following formula (3c), for example. In the following formula (3c), f may be 6 or more and 85 or less, and may be 9 or more and 30 or less:

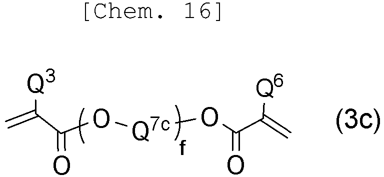

In the formula (3c), Q³, Q⁶, Q^{7c}, and f are as defined in the formula (3b). Examples of the compound represented by the formula (3c) include polyethylene glycol di(meth)acrylate, polypropylene glycol di(meth)acrylate, polytrimethylene glycol di(meth)acrylate, polytetramethylene glycol di(meth)acrylate, polypentamethylene glycol di(meth)acrylate, and polyhexamethylene glycol di(meth)acrylate.

The use of the di(meth)acrylate represented by the formula (3b) wherein d and h are 0 and e and g are 1 or more, that is, the di(meth)acrylate represented by the formula (3b) further including a second alkylene oxide unit, tends to yield a cured product having high functional dye performance. In the di(meth)acrylate represented by such a formula (3b), b and d may be 2 or more and 15 or less, or may be 4 or more and 10 or less.

Examples of the di(meth)acrylate represented by the formula (3b) are as described below:

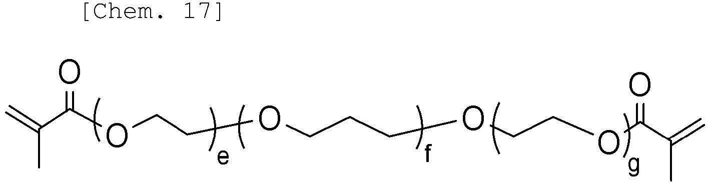

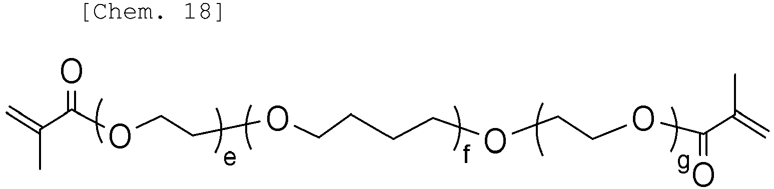

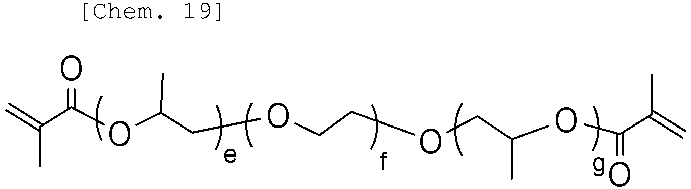

In addition, the di(meth)acrylate represented by the formula (3b) may be a monomer in which d, e, g, and h are 1 or more, that is, may be a monomer including both the second alkylene oxide unit and the third alkylene oxide unit. In this case, the second alkylene oxide unit and the third alkylene oxide unit have different structures.

Examples of the di(meth)acrylate represented by the formula (3b) are as described below:

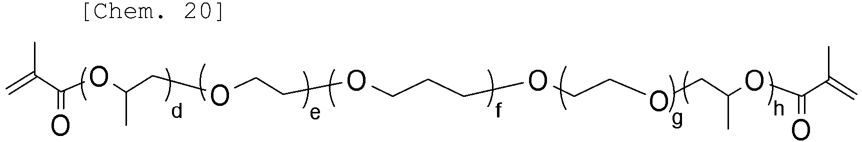

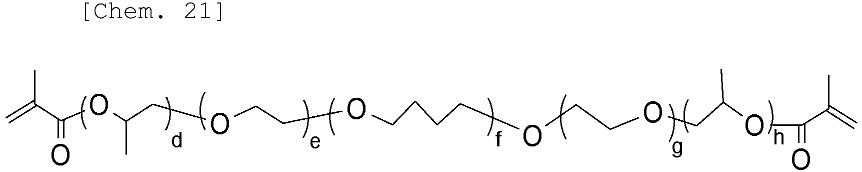

The di(meth)acrylate represented by the formula (3) can be produced, for example, by the following method. First, an isocyanate compound represented by the following formula (4) is prepared. This compound includes one isocyanate group and one (meth)acryloyl group:

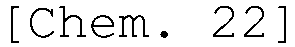

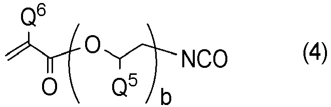

In the formula (4), Q⁵, Q⁶, and b are as defined in the formula (3). The di(meth)acrylate represented by the formula (3) is obtained by reacting an isocyanate compound represented by the formula (4) with a polyol compound represented by the following formula (3d). It should be noted that in the di(meth)acrylate represented by the formula (3) obtained by the above method, Q⁴ and Q⁵ are the same, and a and b are the same. This reaction may be carried out in the presence of a solvent. Examples of the solvent include acetone, methyl ethyl ketone, methyl isobutyl ketone, diethyl ketone, cyclohexanone, dioxane, toluene, hexane, heptane, ethyl acetate, butyl acetate, dimethylformamide, and tetrahydrofuran.

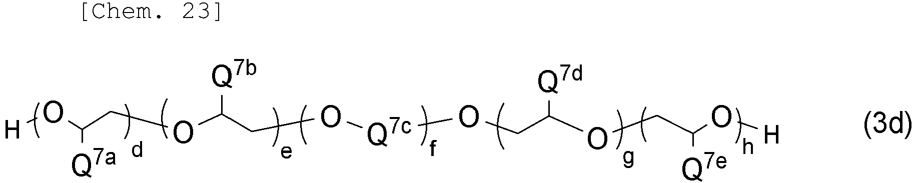

Q^{7a}, Q^{7b}, Q^{7c}, Q^{7d}, Q^{7e}, d, e, f, g, and h of polyol compounds of the formula (3d) are as defined in the formula (3b). The polyol compounds of the formula (3d) may be either vegetable-derived or petroleum-derived.

When Z¹ and Z² are 0 in the formula (3), that is, when the di(meth)acrylate is represented by the formula (3b), the di(meth)acrylate can be produced, for example, by the following method.

The diacrylate represented by the formula (3b) having an acryloyl group can be synthesized by esterification of a polyol compound represented by the formula (3d) with acrylic acid.

Specifically, a polyol compound and acrylic acid dissolved in a solvent such as toluene are reacted in the presence of a mineral acid such as sulfuric acid or hydrochloric acid, an organic acid such as aromatic sulfonic acid, or a Lewis acid such as boron fluoride ether, under stirring, and heating as needed, while removing the generated water azeotropically. Examples of methods for removing water in the esterification reaction include a method for removing water with a drying agent such as anhydrous magnesium sulfate or molecular sieves, and a method for removing water in the presence of a dehydrating agent typified by dicyclohexylcarbodiimide.

In addition, they can be also synthesized by carrying out esterification using an acrylic acid halide. Specifically, in the presence of a base such as pyridine or dimethylaniline, a polyol compound and acrylic acid dissolved in an ether-based solvent such as tetrahydrofuran are stirred while heating as needed and hydrogen halide generated is removed.

Further, they can also be synthesized by transesterification with an acrylic acid anhydride or an ester compound such as methyl acrylate. Specifically, the following method can be employed, in which a polyol compound and acrylic acid dissolved in a solvent such as toluene are reacted in the presence of an acidic catalyst such as aromatic sulfonic acid or a basic catalyst such as sodium acetate or pyridine, under stirring, and heating as needed.

The compound represented by the formula (3b) having a methacryloyl group can be synthesized in the same manner as described above, for example, by using methacrylic acid instead of acrylic acid.

Among the polyol compounds, a polyol compound in which d and h are 0 and e and g are 1 or more, that is, a polyol having the second alkylene oxide unit, can be synthesized, for example, by the following method.

The polyol having the second alkylene oxide unit can be synthesized by reacting H-(OQ^{7c})_{f}-OH with a cyclic ether compound such as ethylene oxide or propylene oxide. The polyol compound having the second alkylene oxide unit can be synthesized, for example, by carrying out a reaction in the presence of a catalyst such as an alkali metal hydroxide such as potassium hydroxide at a high temperature and a high pressure in a nitrogen-substituted autoclave.

Among the polyol compounds, a polyol compound in which d, e, g, and h are 1 or more, that is, a di(meth)acrylate represented by the formula (3b) further including a second alkylene oxide unit and a third alkylene oxide unit can be synthesized, for example, by the following method.

A polyol compound having a second alkylene oxide unit is reacted with a cyclic ether to synthesize a polyol compound having a third alkylene oxide unit, and the obtained polyol compound further having a third alkylene oxide unit is reacted with acrylic acid or methacrylic acid by the same method as described above to synthesize a di(meth)acrylate represented by the formula (3b) further including second and third alkylene oxide units.

The component (A-2) may include a di(meth)acrylate represented by the following formula (5):

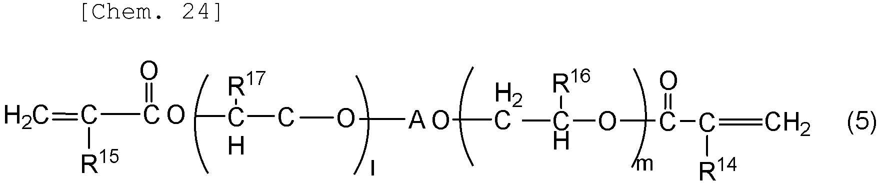

R¹⁴ and R¹⁵ in the formula (5) each represent a hydrogen atom or a methyl group. R¹⁶ and R¹⁷ each represent a hydrogen atom or a methyl group.

A represents a divalent organic group. A is a linear or branched alkylene group having 1 or more and 20 or less carbon atoms, a phenylene group which may have a halogen or an alkyl group having 1 or more and 5 or less carbon atoms as a substituent, a cycloalkylene group, a bicycloalkylene group, a tricycloalkylene group, or a group represented by any of the following formulae.

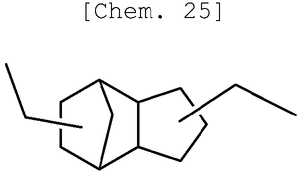

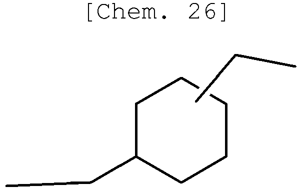

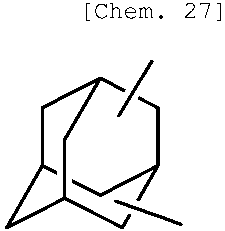

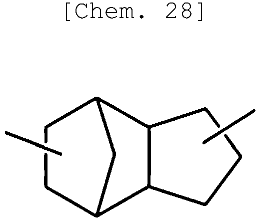

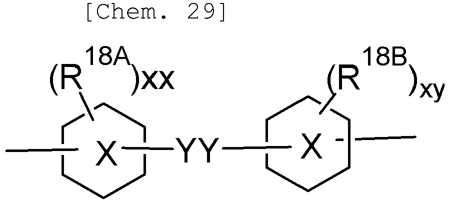

In the above formula, R^{18A} and R^{18B} each represent a hydrogen atom, an alkyl group having 1 or more and 5 or less carbon atoms, or a halogen atom.
xx and xy are from 0 to 4, inclusive, or from 0 to 10, inclusive. Ring X is a benzene ring or a cyclohexane ring. YY represents -O-, -S-, -(SO₂)-, -CO-, -CH₂-, -CH=CH-, -C(CH₃)₂-, - C(CH₃)(C₆H₅)-, or a group represented by any of the following formulae:

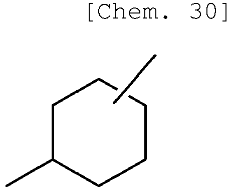

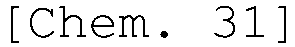

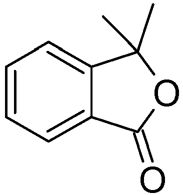

In the formula (5), l and m are each 0, or an integer of 1 or more, and l+m is 2 or more and 30 or less as an average value.

Examples of bifunctional (meth)acrylates represented by the above formula (5) include alkoxylated bisphenol A diacrylate and alkoxylated bisphenol A dimethacrylate.

The component (A-2) may include a di(meth)acrylate represented by the following formula (6):

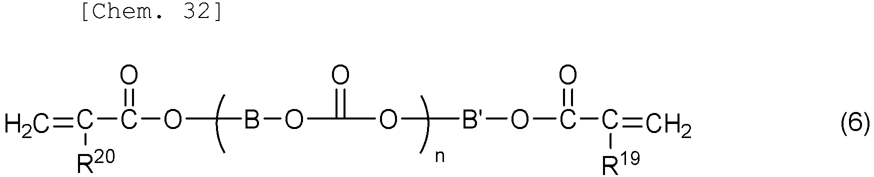

R¹⁹ and R²⁰ in the formula (6) each represent a hydrogen atom or a methyl group.

n is a number of from 1 to 20, inclusive, as an average value.

B and B' each independently represent a linear or branched alkylene group having 2 or more and 15 or less carbon atoms. B and B' may be the same or different from each other. When a plurality of B groups are present, the plurality of B groups may be the same group or different groups.

The bifunctional (meth)acrylate represented by the above formula (6) can be produced by reacting a polycarbonate diol with (meth)acrylic acid.

Examples of the polycarbonate diol to be used herein include the following. Specifically, the examples are as follows:
polycarbonate diol (average molecular weight: from 800 to 2,000, inclusive) obtained by phosgeneation of trimethylene glycol, polycarbonate diol (average molecular weight: from 800 to 2,000, inclusive) obtained by phosgeneation of tetramethylene glycol, polycarbonate diol (average molecular weight: from 800 to 2,000, inclusive) obtained by phosgeneation of pentamethylene glycol, polycarbonate diol (average molecular weight: from 800 to 2,000, inclusive) obtained by phosgeneation of hexamethylene glycol, polycarbonate diol (average molecular weight: from 800 to 2,000, inclusive) obtained by phosgeneation of octamethylene glycol, polycarbonate diol (average molecular weight: from 800 to 2,000, inclusive) obtained by phosgeneation of nonamethylene glycol, polycarbonate diol (average molecular weight: from 800 to 2,000, inclusive) obtained by phosgeneation of triethylene glycol and tetramethylene glycol, polycarbonate diol (average molecular weight: from 800 to 2,000, inclusive) obtained by phosgeneation of tetramethylene glycol and hexamethylene diglycol, polycarbonate diol (average molecular weight: from 800 to 2,000, inclusive) obtained by phosgeneation of pentamethylene glycol and hexamethylene glycol, polycarbonate diol (average molecular weight: from 800 to 2,000, inclusive) obtained by phosgeneation of tetramethylene glycol and octamethylene glycol, polycarbonate diol (average molecular weight: from 800 to 2,000, inclusive) obtained by phosgeneation of hexamethylene glycol and octamethylene glycol, and polycarbonate diol (average molecular weight: from 800 to 2,000, inclusive) obtained by phosgeneation of 1-methyltrimethylene glycol.

The component (A-2) may include a di(meth)acrylate having a urethane bond. The urethane di(meth)acrylate is obtained by reacting a polyisocyanate compound having two isocyanate groups in the molecule, a polyol compound having two hydroxy groups in the molecule, and a hydroxy group-containing (meth)acrylate.

Preferable examples of the polyisocyanate include hexamethylene diisocyanate, isophorone diisocyanate, lysine isocyanate, 2,2,4-hexamethylene diisocyanate, dimeric acid diisocyanate, isopropylidene bis-4-cyclohexylisocyanate, dicyclohexylmethane diisocyanate, norbornene diisocyanate, and methylcyclohexane diisocyanate.

Examples of the polyol include polyalkylene glycols having a repeating unit with 2 or more and 4 or less carbon atoms (e.g., ethylene oxide, propylene oxide, and hexamethylene oxide), and polyester diols such as polycaprolactone diol. The following polyols also can be exemplified: polycarbonate diol, polybutadiene diol, pentaerythritol, ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, glycerin, and trimethylolpropane.

Furthermore, it is also possible to use a reaction mixture obtained by reacting one of the above-mentioned polyisocyanates with a polyol to obtain a urethane prepolymer having an isocyanate group at a terminal and further reacting the obtained urethane prepolymer with 2-hydroxy (meth)acrylate; or a urethane (meth)acrylate monomer, which is a reaction mixture obtained by directly reacting the above-mentioned diisocyanate with 2-hydroxy(meth)acrylate.

Examples of the hydroxy group-containing (meth)acrylate include 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate.

Any commercially available bifunctional (meth)acrylate having a urethane bond can be used without any limitation, and examples thereof include UA-122P (molecular weight: 1,100) and U-122P (molecular weight: 1,100).

The component (A-2) may include a bifunctional (meth)acrylate other than those described above. Examples of the bifunctional (meth)acrylates other than the above include a bifunctional (meth)acrylate containing a sulfur atom and a di(meth)acrylate of an alkylene diol. A sulfur atom of the bifunctional (meth)acrylate which includes the sulfur atom preferably constitutes a part of the molecular chain as a sulfide group. Specifically, examples thereof include bis(2-methacryloyloxyethylthioethyl)sulfide, bis(methacryloyloxyethyl)sulfide, bis(acryloyloxyethyl)sulfide, 1,2-bis(methacryloyloxyethylthio)ethane, 1,2-bis(acryloyloxyethyl)ethane, bis(2-methacryloyloxyethylthioethyl)sulfide, bis(2-acryloyloxyethylthioethyl)sulfide, 1,2-bis(methacryloyloxyethylthioethylthio)ethane, 1,2-bis(acryloyloxyethylthioethylthio)ethane, 1,2-bis(methacryloyloxyisopropylthioisopropyl)sulfide, and 1,2-bis(acryloyloxyisopropylthioisopropyl)sulfide.

For the di(meth)acrylates of alkyldiols, preferred alkylene diols have a linear or branched alkylene group having 2 or more and 30 or less carbon atoms. Specifically, examples the di(meth)acrylates include ethylene glycol di(meth)acrylate, propylene glycol di(meth)acrylate, 1,3-propanediol di(meth)acrylate, neopentyl glycol di(meth)acrylate, 1,4-butanediol di(meth)acrylate, 1,5-pentanediol di(meth)acrylate, 1,6-hexanediol di(meth)acrylate, 1,9-nonanediol di(meth)acrylate, and 1,10-decanediol di(meth)acrylate.

### <(A-3): Third Radically Polymerizable Monomer having a Structure different from the structure of the Component (A-1) and having 3 or More (Meth)Acryloyl Groups in One Molecule>

The curable composition according to the embodiment may further include a third radically polymerizable monomer having a structure different from the structure of the component (A-1) and having 3 or more (meth)acryloyl groups in one molecule, as a component (A-3). Hereinafter, the third radically polymerizable monomer having a structure different from the structure of the component (A-1) and having 3 or more (meth)acryloyl groups in one molecule is also referred to as the component (A-3). When the third radically polymerizable monomer is included, the hardness of the cured product tends to increase.

Examples of the component (A-3) include polyfunctional (meth)acrylates represented by the following formula (I), polyfunctional (meth)acrylates represented by the following formula (II), urethane bond-having polyfunctional (meth)acrylates, and polyfunctional (meth)acrylates which do not correspond to the above. In particular, the component (A-3) is preferably a polyfunctional (meth)acrylate represented by the following formula (I).

### <Polyfunctional (Meth)acrylates represented by the Following Formula (I)>

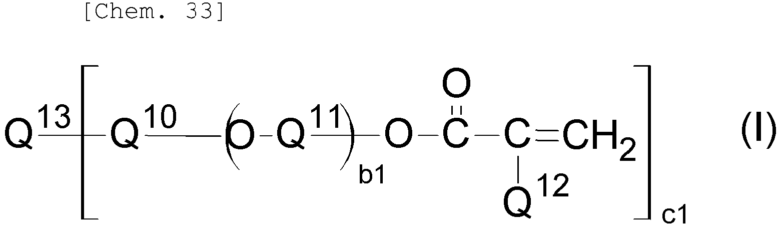

In formula (I), Q¹⁰ represents a linear or branched alkylene group having 1 or more and 3 or less carbon atoms. Q¹⁰ preferably represents a linear alkylene group having 1 or more and 3 or less carbon atoms, and particularly preferably a methylene group.

Q¹¹ represents a linear or branched alkylene group having 1 or more and 10 or less carbon atoms. Q¹¹ preferably represents a linear alkylene group having 1 or more and 10 or less carbon atoms, more preferably a linear alkylene group having 2 or more and 6 or less carbon atoms, and particularly preferably a linear alkylene group having 2 or more and 4 or less carbon atoms.

Q¹² represents a hydrogen atom or a methyl group. Q1² preferably represents a methyl group.

Q¹³ represents an organic group having a valency of from 3 to 6, inclusive, and having 1 or more and 10 or less carbon atoms. Examples of the organic group represented by Q¹³ include a group derived from a polyol, a hydrocarbon group having a valency of from 3 to 6, inclusive, and an organic group including a urethane bond having a valency of from 3 to 6, inclusive. Q1³ is preferably a group derived from a polyol or a hydrocarbon group having a valency of from 3 to 6, inclusive, and is preferably a trimethylolpropane-derived group, a pentaerythritol-derived group, a ditrimethylolpropane-derived group, or a dipentaerythritol-derived group.

b1 is a number of 0 or more and 15 or less. In order to further increase the hardness of the obtained cured product, b1 is preferably a number of 0 or more and 6 or less, more preferably a number of 0 or more and 4 or less, still more preferably a number of 0 or more and 2 or less, and particularly preferably 0.

Additionally, when it is desired to enhance the performance of the functional dye of the obtained cured product, b1 is preferably a number of 5 or more and 15 or less, more preferably a number of 5 or more and 13 or less, still more preferably a number of 6 or more and 12 or less, and particularly preferably a number of 6 or more and 11 or less.

c1 is 3 or more and 6 or less.

The polyfunctional (meth)acrylate represented by the following formula (I) may include a trifunctional or tetrafunctional (meth)acrylate represented by the following formula (II):

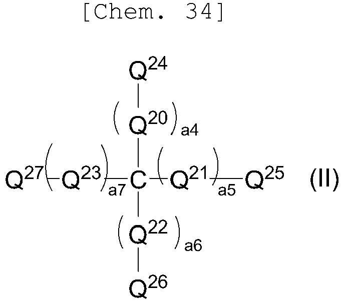

In the formula (II), Q²⁰, Q²¹, Q²², and Q²³ each independently represent an alkylene group having 1 or more and 3 or less carbon atoms. Q²⁰, Q²¹, Q²², and Q²³ are preferably a methylene group.
a4, a5, a6, and a7 are each independently an integer of 0 or 1.

Q²⁴, Q²⁵, and Q²⁶ each independently represent a monovalent group represented by the following formula (III):

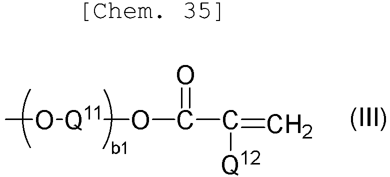

In the formula (III), Q¹¹, Q¹² and b1 are as defined in formula (I).

Q²⁴, Q²⁵, and Q²⁶ may have structures that differ to each other or they may have the same structure. Q²⁴, Q²⁵, and Q²⁶ preferably have the same structure.

Q²⁷ represents a hydrogen atom, a linear or branched alkyl group having 1 or more and 5 or less carbon atoms, a linear or branched alkoxy group having 1 or more and 5 or less carbon atoms, or a monovalent group represented by the formula (III). Q²⁷ preferably represents a hydrogen atom, a linear alkyl group having 1 or more and 3 or less carbon atoms, or a monovalent group represented by the formula (III).

Examples of the polyfunctional (meth)acrylates represented by the above formula (I) include trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, dipentaerythritol hexaacrylate, dipentaerythritol pentaacrylate, dipentaerythritol hexamethacrylate, dipentaerythritol pentamethacrylate, ethoxylated trimethylolpropane trimethacrylate, propoxylated trimethylolpropane trimethacrylate, butoxylated trimethylolpropane trimethacrylate, ethoxylated trimethylolpropane triacrylate, propoxylated trimethylolpropane triacrylate, butoxylated trimethylolpropane triacrylate, ethoxylated pentaerythritol tetramethacrylate, propoxylated pentaerythritol tetramethacrylate, butoxylated pentaerythritol tetramethacrylate, ethoxylated pentaerythritol tetraacrylate, propoxylated pentaerythritol tetraacrylate, and butoxylated pentaerythritol tetraacrylate.

### <Urethane Bond-Having Polyfunctional (Meth)Acrylate>

A urethane bond-having polyfunctional (meth)acrylate is obtained by reacting a polyisocyanate compound having 3 or more isocyanate groups in a molecule, a polyol compound having 2 or more hydroxy groups in a molecule, and a hydroxy group-containing (meth)acrylate. The urethane bond-having polyfunctional (meth)acrylate is preferably a urethane bond-having polyfunctional (meth)acrylate which has 4 or more (meth)acryloyl groups in the molecule. Examples of commercially available products include U-4HA (molecular weight: 596, number of functional groups: 4), U-6HA (molecular weight: 1,019, number of functional groups: 6), U-6LPA (molecular weight: 818, number of functional groups: 6), and U-15HA (molecular weight: 2,300, number of functional groups: 15) manufactured by Shin-Nakamura Chemical.

### <Polyfunctional (Meth)acrylates not corresponding to the Above>

Examples of the polyfunctional (meth)acrylates other than the polyfunctional (meth)acrylates represented by the formula (I) and the urethane bond-having polyfunctional (meth)acrylates include compounds in which the terminal of a polyester compound is modified with a (meth)acryloyl group. As such polyester (meth)acrylate compounds, various polyester (meth)acrylate compounds, among which the polyesters as raw materials differ in the molecular weight and/or modification amounts by the (meth)acryloyl group differ, are commercially available, and those can be used. Examples thereof include tetrafunctional polyester oligomers (molecular weight: from 2,500 to 3,500, inclusive, EB80, etc. manufactured by Daicel UCB), hexafunctional polyester oligomers (molecular weight: from 6,000 to 8,000, inclusive, EB450, etc. manufactured by Daicel UCB), hexafunctional polyester oligomers (molecular weight: from 45,000 to 55,000, inclusive, EB1830, etc. manufactured by Daicel UCB), and tetrafunctional polyester oligomers (particularly, GX8488B, etc. having a molecular weight of 10,000 manufactured by DKS).

In the curable composition according to the embodiment, when the proportion of the third radically polymerizable monomer is high, the hardness of the cured product tends to increase. This proportion may be 5 mass% or more, preferably 10 mass% or more, more preferably 15 mass% or more, still more preferably 20 mass% or more, and particularly preferably 25 mass% or more. On the other hand, when this proportion is excessively high, the functional dye performance tends to decrease. This proportion may be 95 mass% or less, preferably 80 mass% or less, more preferably 70 mass% or less, and still more preferably 60 mass% or less.

### <Component (A-4): Other Radically Polymerizable Monomers having (Meth)acryloyl Group>

Examples of other radically polymerizable monomers having a (meth)acryloyl group include radically polymerizable monomers which have a (meth)acryloyl group in the molecular structure and do not correspond to (A-1), (A-2), or (A-3). Such a radically polymerizable monomer is not particularly limited, and a known radically polymerizable monomer may be used. A monofunctional (meth)acrylate having only one (meth)acryloyl group also may be included.

Examples of the monofunctional (meth)acrylates include monofunctional (meth)acrylates represented by the following formula (7):

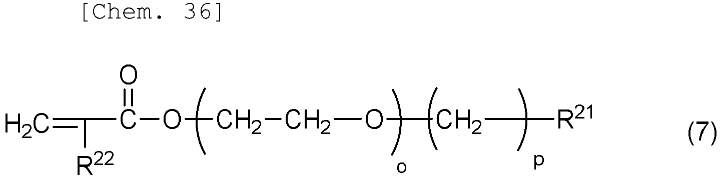

R²¹ in the formula (7) represents a hydrogen atom, a methyldimethoxysilyl group, a trimethoxysilyl group, a glycidyl group, a pentamethylpiperidino group, or a 2,2,6,6-tetramethylpiperidino group. R²² represents a hydrogen atom or a methyl group. O is an integer of from 0 to 10, inclusive. p is an integer of from 0 to 20, inclusive.

R²¹ is preferably a methyldimethoxysilyl group, a trimethoxysilyl group, or a glycidyl group. When a monofunctional acrylate having such a functional group is included, the adhesiveness between the cured product and the substrate tends to improve.

Examples of the monofunctional (meth)acrylates represented by the above formula (7) include methoxypolyethylene glycol methacrylate, methoxypolyethylene glycol acrylate, stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, 1,2,2,6,6-pentamethyl-4-piperidyl methacrylate, and 2,2,6,6-tetramethyl-4-piperidyl methacrylate.

### <Other Radically Polymerizable Monomers>

The curable composition according to the embodiment may further include another radically polymerizable monomer. The other radically polymerizable monomer is not particularly limited as long as it can be polymerized with the first radically polymerizable monomer, and known radically polymerizable monomers can be used. For example, a radically polymerizable polyrotaxane, a radically polymerizable silsesquioxane compound, an allyl-based compound, and a vinyl-based compound are preferably used.

### <Radically Polymerizable Polyrotaxane>

Polyrotaxanes have a complex molecular structure composed of an axial molecule and a plurality of cyclic molecules threaded onto the axial molecule. Bulky terminal groups are formed at both ends of the axial molecule, preventing the cyclic molecule from falling off the axial molecule. Radically polymerizable polyrotaxanes are polyrotaxanes in which radically polymerizable groups are introduced in side chains of the cyclic molecules. The radically polymerizable group is introduced by, for example, modifying 1 mol% or more and less than 100 mol% of the hydroxy group of the cyclic molecule to the radically polymerizable group. A modification proportion can be calculated by the following equation: (number of moles of polymerizable groups introduced)/(number of moles of total OH groups in side chains) × 100. From the viewpoints of adhesion, mechanical strength, and performance of the resulting cured product, the modification proportion is preferably 10 mol% or more and 95 mol% or less.

When the weight average molecular weight of the axial molecule is too large, compatibility with other polymerizable monomers or the like tends to decrease, and when it is too small, mobility of the cyclic molecule tends to decrease. The weight average molecular weight of the axial molecule is preferably in the range of from 1,000 to 100,000, inclusive, more preferably in the range of from 5,000 to 80,000, inclusive, and most preferably in the range of from 8,000 to 50,000, inclusive.

The cyclic molecule is preferably a cyclodextrin ring, a crown ether ring, a benzocrown ring, a dibenzocrown ring, or a dicyclohexanocrown ring, particularly preferably a cyclodextrin ring or a crown ether ring, and most preferably a cyclodextrin ring. Further, while cyclodextrin rings include an α-form (ring inner diameter: from 0.45 to 0.6 nm, inclusive), a β-form (ring inner diameter: from 0.6 to 0.8 nm, inclusive) and a γ-form (ring inner diameter: from 0.8 to 0.95 nm, inclusive), an α-cyclodextrin ring and a β-cyclodextrin ring are preferable, and an α-cyclodextrin ring is most preferable. Assuming that when an inclusion number is defined as 1 if all cyclic molecules are threaded onto the axis molecule, the inclusion number is preferably in the range of from 0.001 to 0.6, inclusive, more preferably in the range of from 0.002 to 0.5, inclusive, and most preferably in the range of from 0.003 to 0.4, inclusive.

The radically polymerizable group is preferably a (meth)acryloyl group in consideration of reactivity with other polymerizable monomers. The number of radically polymerizable groups is also not particularly limited, and is preferably from 0 to 5,000, inclusive, in one molecule.

Such polyrotaxanes having a (meth)acryloyl group are described in, for example, WO 2018/030257.

### <Silsesquioxane Radically Polymerizable Compounds>

Silsesquioxane radically polymerizable compounds have various molecular structures such as a cage shape, a ladder shape, and a random shape, and have a radically polymerizable group such as a (meth)acrylic group.

Examples of such silsesquioxane polymerizable compounds include those represented by the following formula (8):

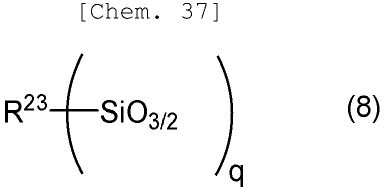

In the formula (8), q is a degree of polymerization and is an integer of from 3 to 100, inclusive.

A plurality of R²³ groups may be the same as or different from each other, and are radically polymerizable groups, organic groups containing a radically polymerizable group, hydrogen atoms, alkyl groups, cycloalkyl groups, alkoxy groups, or phenyl groups, and at least one R²³ is a radically polymerizable group or an organic group including a radically polymerizable group.

Here, examples of the radically polymerizable group represented by R²³ or the organic group including a radically polymerizable group include a (meth)acrylic group; an organic group having a (meth)acrylic group, such as a (meth)acryloyloxypropyl group or a (3-(meth)acryloyloxypropyl)dimethylsiloxy group; an allyl group; an organic group having an allyl group such as an allylpropyl group or an allylpropyldimethylsiloxy group; a vinyl group; an organic group having a vinyl group such as a vinylpropyl group and a vinyldimethylsiloxy group.

### <Allyl-Based Polymerizable Compound>

Examples of allyl-based polymerizable compounds having an allyl group include the following compounds: diethylene glycol bisallyl carbonate, methoxypolyethylene glycol allyl ether, methoxypolyethylene glycol-polypropylene glycol allyl ether, butoxypolyethylene glycol-polypropylene glycol allyl ether, phenoxypolyethylene glycol allyl ether, vinyloxypolyethylene glycol allyl ether, styryloxypolyethylene glycol allyl ether, and methoxypolyethylenethioglycol allyl thioether.

### <Vinyl-Based Polymerizable Compounds>

Examples of vinyl-based polymerizable compounds having a vinyl group include methyl vinyl ketone, ethyl vinyl ketone, ethyl vinyl ether, styrene, vinyl cyclohexane, butadiene, 1,4-pentadiene, divinyl sulfide, divinyl sulfone, 1,2-divinylbenzene, 1,3-divinyl-1,1,3,3-tetramethylpropanedisiloxane, diethylene glycol divinyl ether, divinyl adipate, divinyl sebacate, ethylene glycol divinyl ether, divinyl sulfoxide, divinyl persulfide, dimethyldivinylsilane, 1,2,4-trivinylcyclohexane, methyltrivinylsilane, α-methylstyrene, and α-methylstyrene dimer.

### <Blending Proportion in the Curable Composition>

In the curable composition according to the embodiment, when the proportion of the first radically polymerizable monomer is high, the hardness of the cured product tends to increase and the functional dye performance tends to increase. This proportion may be 5 mass% or more, preferably 10 mass% or more, more preferably 15 mass% or more, still more preferably 20 mass% or more, and particularly preferably 25 mass% or more. On the other hand, when this proportion is excessively high, the functional dye performance tends to decrease. This proportion may be 95 mass% or less, preferably 80 mass% or less, and more preferably 60 mass% or less.

In the curable composition according to the embodiment, the proportion of the second radically polymerizable monomer is, for example, 10 mass% or more and 90 mass% or less. When this proportion is high, the functional dye performance tends to increase in the cured product. This proportion may be 35 mass% or more, preferably 40 mass% or more, more preferably 45 mass% or more, still more preferably 50 mass% or more, and particularly preferably 60 mass% or more. On the other hand, when this proportion is excessively high, the hardness of the cured product tends to decrease. This proportion is preferably 85 mass% or less, and more preferably 80 mass% or less.

In the curable composition according to the embodiment, a content of the di(meth)acrylate other than the second radically polymerizable monomer is preferably 50 mass% or less. In other words, when the content of di(meth)acrylate such as polyalkylene carbonate polyol di(meth)acrylate is large, the functional dye performance of the cured product may be deteriorated. The content of the di(meth)acrylate other than the second radically polymerizable monomer is more preferably 30 mass% or less, and still more preferably 20 mass% or less. The lower limit of this content is 0 mass% in one example, and 5 mass% or more in another example.

The curable composition according to the embodiment preferably further includes a third radically polymerizable monomer from the viewpoint of enhancing the curability of the cured product. In the curable composition according to the embodiment, the proportion of the third radically polymerizable monomer is preferably 5 mass% or more, more preferably 7 mass% or more, still more preferably 10 mass% or more, and particularly preferably 15 mass% or more. On the other hand, when this proportion is excessively high, the functional dye performance of the cured product tends to decrease. This proportion is preferably 95 mass% or less, more preferably 85 mass% or less, and still more preferably 75 mass% or less.

The curable composition according to the embodiment preferably includes a monofunctional (meth)acrylate from the viewpoint of enhancing the appearance and adhesion of the cured product. The proportion of the monofunctional (meth)acrylate in the curable composition according to the embodiment is preferably 1 mass% or more, more preferably 3 mass% or more, and still more preferably 5 mass% or more. On the other hand, when this proportion is excessively high, the functional dye performance of the cured product tends to decrease. This proportion is preferably 20 mass% or less, more preferably 10 mass% or less, and still more preferably 8 mass% or less.

In the curable composition including the first to third radically polymerizable monomers, the content of the first radically polymerizable monomer may be 5 mass% or more and 80 mass% or less, the content of the second radically polymerizable monomer may be 10 mass% or more and 80 mass% or less, the content of the third radically polymerizable monomer may be 5 mass% or more and 75 mass% or less, and the balance may be a proportion of the functional dye and additives.

In the curable composition according to the embodiment, a proportion of methacrylate is preferably 30 mass% or more. A higher proportion of this component tends to result in a cured product with superior functional dye performance. This proportion is preferably 60 mass% or more. The upper limit of this proportion is 100 mass% in one example and 90 mass% or less in another example.

Ratio M2/M1 of mass M1 of the first radically polymerizable monomer to mass M2 of the second radically polymerizable monomer is preferably 0.1 or more and 20 or less. When a curable composition having the ratio M2/M1 within this range is used, the functional dye performance and the hardness of the cured product tend to increase. The ratio M2/M1 is more preferably 0.5 or more and 10 or less, and further preferably 1 or more and 5 or less.

Ratio M1/M3 of mass M1 of the first radically polymerizable monomer to mass M3 of the third radically polymerizable monomer is preferably 0.1 or more and 20 or less. When a curable composition having the ratio M1/M3 within this range is used, the functional dye performance and the hardness of the cured product tend to increase. The ratio M1/M3 is more preferably 0.5 or more and 10 or less, and further preferably 1 or more and 5 or less.

Ratio M2/M3 of mass M2 of the second radically polymerizable monomer to mass M3 of the third radically polymerizable monomer is preferably 0.1 or more and 20 or less. When a curable composition having the ratio M2/M3 within this range is used, the functional dye performance and the hardness of the cured product tend to increase. The ratio M2/M3 is more preferably 0.5 or more and 10 or less, and further preferably 1 or more and 5 or less.

### <Functional Dye (B)>

A functional dye includes a compound which has a selective absorption ability for visible light, as well as a compound which develops color, decolors, or changes in color by energy such as light, heat, an electric field, or pressure. Such a functional dye can exert a specific function by undergoing a structural change under specific conditions. The functional dye includes, for example, at least one type selected from the group consisting of a photochromic compound, an ultraviolet absorber, a blue light absorber, an infrared absorber, and an electrochromic compound. A content of the functional dye in the curable composition is, for example, 0.01 mass% or more and 10 mass% or less. The content of the functional dye is preferably 0.1 mass% or more and 8 mass% or less, and more preferably 1 mass% or more and 5 mass% or less.

### <Photochromic Compounds>

A photochromic compound is used in an amount to obtain desired photochromic properties. The photochromic compound is preferably used in an amount of from 0.01 to 10 parts by mass, inclusive, with respect to 100 parts by mass of the component (A).

The optimum blending amount is preferably adjusted depending upon the application to be used. Specifically, when the curable composition including a photochromic compound is formed into a thin film such as a coating, for example, a thin film of about 100 µm thick (polymer film obtained by polymerizing a curable composition including a photochromic compound), it is preferable to adjust color tone by blending from 0.1 to 10 parts by mass, inclusive, of a photochromic compound with respect to 100 parts by mass of the component (A).

In the case of producing a thick cured product (polymer molded product obtained by polymerizing a curable composition including a photochromic compound), for example, in the case of producing a cured product having a thickness of 1 mm or more, it is preferable to adjust color tone by blending from 0.01 to 1 part by mass, inclusive, of a photochromic compound with respect to 100 parts by mass of the thick cured product or 100 parts by mass of the component (A) which yields the thick cured product.

As the photochromic compound, known compounds can be used without any limitation, and these can be used alone or in combination of two or more types thereof. Typical examples of such photochromic compounds include chromene compounds, fulgide compounds, fulgimide compounds, and spirooxazine compounds. Among these photochromic compounds, chromene compounds and spirooxazine compounds are preferably used. Chromene compounds are particularly preferable. Examples of the chromene compounds include compounds having a 1-benzopyran skeleton, spiropyran compounds having a spiropyran skeleton, and naphthopyran compounds having a naphthopyran skeleton.

The naphthopyran compounds preferably include any one of the compounds represented by the following formula (9), the following formula (10), the following formula (11), the following formula (12), the following formula (13), and the following formula (14):

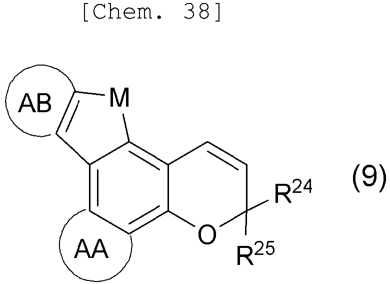

In the formula (9), a ring AA is a substituted or unsubstituted aromatic hydrocarbon ring, a substituted or unsubstituted aromatic heterocycle, or a substituted or unsubstituted condensed polycyclic ring in which an aromatic ring or an aromatic heterocycle is condensed with these rings. The ring AA may be absent. A ring AB is a substituted or unsubstituted aromatic hydrocarbon ring, a substituted or unsubstituted aromatic heterocycle, or a substituted or unsubstituted condensed polycyclic ring in which an aromatic ring or an aromatic heterocycle is condensed with these rings.

R²⁴ and R²⁵ each independently represent a hydrogen atom or a substituent, and two or more substituents may be bonded to each other to form a ring structure.

Examples of the substituent include a hydroxy group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group which may have a substituent, an aralkoxy group which may have a substituent, an aryloxy group which may have a substituent, an alkylthio group which may have a substituent, an arylthio group which may have a substituent, an aryl group which may have a substituent, an amino group, a substituted amino group, and a heterocyclic group which may have a substituent. At least one selected from the group consisting of a haloalkylthio group, a cycloalkylthio group which may have a substituent, an oligomer group, and a group represented by the following formula (15) is preferable:

-Q¹-(P¹Q²)ₐₐ-P²Q³ (15).

In the formula (15), Q¹ represents an alkylene group which may include a halogen atom as a substituent. Q2 represents an alkylene group which may include a halogen atom as a substituent. Q3 represents an alkyl group which may include a halogen atom as a substituent. P¹ and P² each independently represent O, S, NR⁷⁰⁰, PR⁷⁰¹, or P(=O). R⁷⁰⁰ represents a hydrogen atom, an alkyl group which may have a substituent, a cycloalkyl group which may have a substituent, an aryl group which may have a substituent, or a heteroaryl group which may have a substituent. R⁷⁰¹ represents a hydrogen atom, an alkyl group which may have a substituent, a cycloalkyl group which may have a substituent, an aryl group which may have a substituent, or a heteroaryl group which may have a substituent.
aa is 0, or 1 or more and 10 or less.

In the formula (9), M represents CR²⁶R²⁷, SiR²⁶R²⁷, GeR²⁶R²⁷, or NR²⁶. R²⁶ and R²⁷ each independently represent a hydrogen atom or a substituent, and two or more substituents may be bonded to each other to form a ring structure.

A preferable substituent is at least one selected from the group consisting of a hydroxy group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group which may have a substituent, an aralkoxy group which may have a substituent, an aryloxy group which may have a substituent, an alkylthio group which may have a substituent, an arylthio group which may have a substituent, an aryl group which may have a substituent, an amino group, a substituted amino group, a heterocyclic group which may have a substituent, and a group represented by the above formula (15). When two R²⁶ and R²⁷ form a ring structure together, it is preferable to form an aliphatic ring having 3 or more and 20 or less ring member carbon atoms, a condensed polycycle in which an aromatic ring or an aromatic heterocycle is condensed to the aliphatic ring, a heterocycle having 3 or more and 20 or less ring member carbon atoms, or a condensed polycycle in which an aromatic ring or an aromatic heterocycle is condensed to the heterocycle.

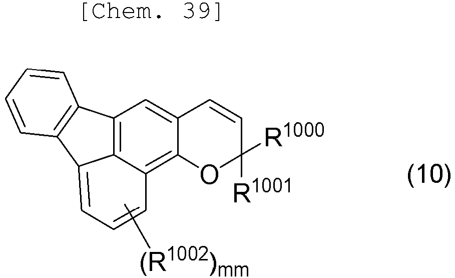

In the formula (10), R¹⁰⁰⁰, R¹⁰⁰¹ and R¹⁰⁰² each independently represent a hydrogen atom or a substituent, and two or more substituents may be bonded to each other to form a ring structure. As the substituent, the same substituents as those described in the formula (9) may be used.
mm is from 1 to 10, inclusive.

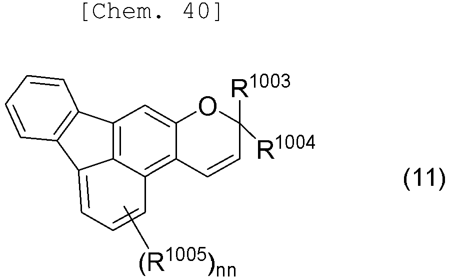

In the formula (11), R¹⁰⁰³, R¹⁰⁰⁴, and R¹⁰⁰⁵ each independently represent a hydrogen atom or a substituent, and two or more substituents may be bonded to form a ring structure. As the substituent, the same substituents as those described in the formula (9) may be used.
nn is from 1 to 10, inclusive.

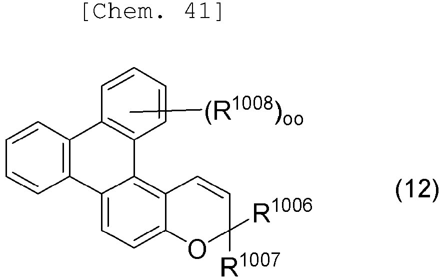

In the formula (12), R¹⁰⁰⁶, R¹⁰⁰⁷, and R¹⁰⁰⁸ each independently represent a hydrogen atom or a substituent, and two or more substituents may be bonded to each other to form a ring structure. As the substituent, the same substituents as those described in the formula (9) may be used.
oo is from 1 to 12, inclusive.

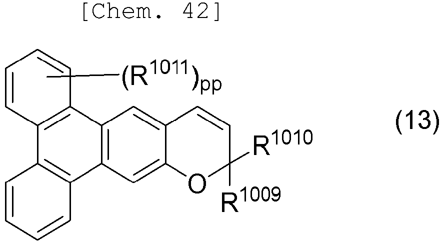

In the formula (13), R¹⁰⁰⁹, R¹⁰¹⁰ and R¹⁰¹ each independently represent a hydrogen atom or a substituent, and two or more substituents may be bonded to each other to form a ring structure. As the substituent, the same substituents as those described in the formula (9) may be used.
pp is from 1 to 12, inclusive.

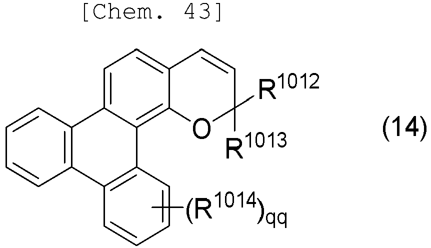

In the formula (14), R¹⁰¹², R¹⁰¹³, and R¹⁰¹⁴ each independently represent a hydrogen atom or a substituent, and two or more substituents may be bonded to each other to form a ring structure. As the substituent, the same substituents as those described in the formula (9) may be used.
qq is from 1 to 12, inclusive.

Examples of naphthopyran compounds include indenonaphthopyran compounds having an indenonaphthopyran skeleton. The indenonaphthopyran compounds preferably have an indeno[2,1-f]naphtho[1,2-b]pyran skeleton.

The indenonaphthopyran compounds preferably include a compound represented by the following formula (16):

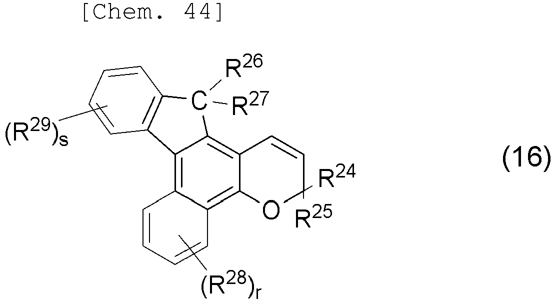

In the formula (16), R²⁴, R²⁵, R²⁶ and R²⁷ are the same as defined above:
r is an integer of from 0 to 4, inclusive.
s is an integer of from 0 to 4, inclusive. When r is from 2 to 4, inclusive, a plurality of R²⁸ may be the same as or different from each other. When s is from 2 to 4, inclusive, a plurality of R²⁹ groups may be the same as or different from each other. In the case where r is from 2 to 4, inclusive and there are adjacent R²⁸ groups, the two adjacent R²⁸ groups may form a ring which may include at least one heteroatom selected from the group consisting of an oxygen atom, a carbon atom, a sulfur atom, and a nitrogen atom, together with carbon atoms to which the R²⁸ groups are bonded, and the ring may have a substituent. In the case where s is from 2 to 4, inclusive and there are adjacent R²⁹ groups, the two adjacent R²⁹ groups may form a ring which may include at least one heteroatom selected from the group consisting of an oxygen atom, a carbon atom, a sulfur atom, or a nitrogen atom, together with carbon atoms to which the R²⁹ groups are bonded, and the ring may have a substituent.

R²⁸ and R²⁹ each independently represent a group represented by the formula (15), a hydroxy group, an alkyl group, a haloalkyl group, a cycloalkyl group which may have a substituent, an alkoxy group, an amino group, a substituted amino group, a heterocyclic group which may have a substituent, a cyano group, a halogen atom, an alkylthio group, an arylthio group which may have a substituent, a nitro group, a formyl group, a hydroxycarbonyl group, an alkylcarbonyl group, an alkoxycarbonyl group, an aralkyl group which may have a substituent, an aralkoxy group which may have a substituent, an aryloxy group which may have a substituent, an aryl group which may have a substituent, a heteroaryl group which may have a substituent, a thiol group, an alkoxyalkylthio group, a haloalkylthio group, a cycloalkylthio group which may have a substituent, a silyl group which may have a substituent, an oxysilyl group which may have a substituent, a group represented by the following formula (17), or a group represented by L-R⁴⁰⁰:

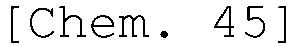

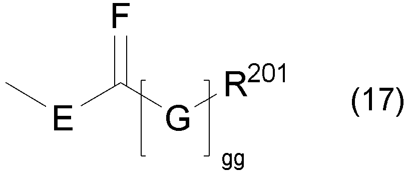

In the formula (17), E represents an oxygen atom or NR¹⁰¹, and R¹⁰¹ represents a hydrogen atom or an alkyl group. F represents an oxygen atom or a sulfur atom. G represents an oxygen atom, a sulfur atom, or NR²⁰². R²⁰² is a hydrogen atom, an alkyl group, a cycloalkyl group, an aryl group, or a heteroaryl group.
gg is an integer of 0 or 1. R²⁰¹ is a hydrogen atom, an alkyl group, a cycloalkyl group, an aryl group, or a heteroaryl group. When G represents an oxygen atom or a sulfur atom, R²⁰¹ represents a group other than a hydrogen atom.

In the group represented by L-R⁴⁰⁰, R⁴⁰⁰ is a hydrogen atom, an alkyl group, an aryl group, a silyl group having a substituent, a polymerizable group, or a photochromic group. The substituent of the silyl group is an alkyl group, an alkoxyl group, or an aryl group. L is a group represented by the following formula (18):

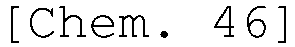

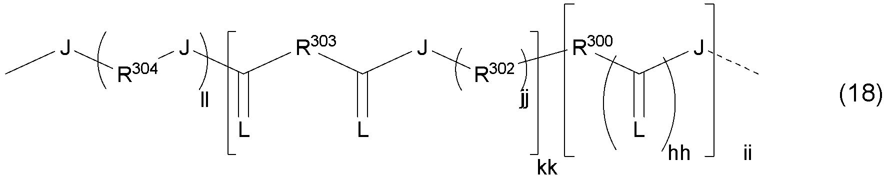

In the formula (18), J groups are divalent groups and each independently represent a direct bond, a substituted methylene group, an oxygen atom, a sulfur atom, or NR³⁰¹. R³⁰¹ represents a hydrogen atom or an alkyl group. L in formula (18) represents an oxygen atom or a sulfur atom. R³⁰⁰ represents an alkylene group or a silylene group having an alkyl group or an aryl group as a substituent. R³⁰², R³⁰³ and R³⁰⁴ represent alkylene groups.
hh, jj, kk, and ll are integers of 0 or 1.
ii is an integer of from 1 to 200, inclusive. When ii is 2 or more, a plurality of units ii may be the same or different. The dashed line represents a bond to R⁴⁰⁰.

### <Other Additives>

Various known additive agents can be blended in the curable composition within a range where the effect is not impaired. The additive agent includes, for example, various stabilizers such as a release agent, an ultraviolet absorber, an infrared absorber, an ultraviolet stabilizer, an antioxidant, a coloring inhibitor, an antistatic agent, a fluorescent dye, a dye, a pigment, and a fragrance. A solvent and a leveling agent can be also incorporated. Thiols such as t-dodecylmercaptan can be blended as a polymerization regulator.

### <Ultraviolet Stabilizer>

When an ultraviolet stabilizer is mixed and used, the durability of the photochromic compound can be further improved, and therefore it is preferable to blend an ultraviolet stabilizer. As the ultraviolet stabilizer, a hindered amine light stabilizer, a hindered phenol antioxidant, or a sulfur-based antioxidant can be suitably used. The hindered amine light stabilizer is not particularly limited, but bis(1,2,2,6,6-pentamethyl-4-piperidyl) sebacate is particularly preferable from the viewpoint of preventing deterioration of the photochromic compound. In addition, hindered amine-based light stabilizers commercially available under the trade names of Adekastab LA-52, LA-57, LA-62, LA-63, LA-67, LA-77, LA-87, and the like from ADEKA Corporation can also be suitably used.

The hindered phenol antioxidant is preferable from the viewpoint of preventing deterioration of the photochromic compound. Examples include 2,6-di-t-butyl-4-methyl-phenol, IRGANOX 245 manufactured by BASF Japan: ethylenebis(oxyethylene)bis[3,5-tert-butyl-4-hydroxy-m-toluyl]propionate], IRGANOX1076 manufactured by BASF Japan Ltd.: octadecyl-3-(3,5-di-tert-butyl-4-hydroxyphenyl)propionate, IRGANOX 1010 manufactured by BASF Japan: pentaerythritol tetrakis[3-(3,5-di-tert-butyl-4-hydroxyphenyl)propionate], and IRGANOX 1035, 1075, 1098, 1135, 1141, 1222, 1330, 1425, 1520, 259, 3114, 3790, 5057, and 565 manufactured by BASF Japan.

An amount of such an ultraviolet stabilizer to be used is not particularly limited as long as the effect is not impaired, but is usually in the range of from 0.001 to 10 parts by mass, inclusive, and particularly from 0.01 to 1 part by mass, inclusive, per 100 parts by mass of the curable composition.

### <Polymerization Initiators>

Polymerization initiators include thermal polymerization initiators and photopolymerization initiators. Examples thereof are as follows.

Examples of the thermal polymerization initiators include:
diacyl peroxides: benzoyl peroxide, p-chlorobenzoyl peroxide, decanoyl peroxide, lauroyl peroxide, and acetyl peroxide;
peroxyesters: t-butyl peroxy-2-ethylhexanate, t-butyl peroxyneodecanate, cumyl peroxyneodecanate, and t-butyl peroxybenzoate;
percarbonates: diisopropyl peroxydicarbonate and di-sec-butyl peroxydicarbonate;
azo compounds: azobisisobutyronitrile;
and the like.

Examples of photopolymerization initiators include:
acetophenone-based compounds: 1-phenyl-2-hydroxy-2-methylpropan-1-one, 1-hydroxycyclohexylphenyl ketone, and 1-(4-isopropylphenyl)-2-hydroxy-2-methylpropan-1-one;
α-dicarbonyl compounds: 1,2-diphenylethanedione and methylphenylglycoxylate;
acylphosphine oxide-based compounds: 2,6-dimethylbenzoyldiphenylphosphine oxide, 2,4,6-trimethylbenzoyldiphenylphosphine oxide, 2,4,6-trimethylbenzoyldiphenylphosphine acid methyl ester, 2,6-dichlorobenzoyldiphenylphosphine oxide, and 2,6-dimethoxybenzoyldiphenylphosphine oxide;
and the like.

It should be noted that when a photopolymerization initiator is used, a known polymerization curing accelerator such as tertiary amine may be used in combination.

### <Surfactants>

Addition of a surfactant improves wettability with respect to the optical substrate and/or primer layer, and also can prevent occurrence of poor appearance. Examples of the surfactants include known surfactants such as silicone surfactants having a silicone chain (polyalkylsiloxane unit) as a hydrophobic group and a fluorine surfactant having a fluorocarbon chain. When using a surfactant, two or more types thereof may be mixed and used. Furthermore, the surfactant may be either a surfactant that can be polymerized with the component (A) or a surfactant that cannot be polymerized therewith.

Examples of suitable silicone surfactants and fluorosurfactants include: L-7001, L-7002, L-7604, FZ-2123, and FZ-2110 manufactured by Dow Toray; Megaface F-470, Megaface F-1405, and Megaface F-479 manufactured by DIC Corporation; Fluorad FC-430 manufactured by 3M Japan; TEGORAD 2100 and TEGORAD 2300 manufactured by Evonik Japan; BYK-UV3505, BYK-UV3510, BYK-UV3530, BYK-3550, BYK-3560, BYK-UV3565, BYK-3566, BYK-UV3500, BYK-UV3535, BYK-UV3570, BYK-UV3575, and BYK-UV3576 manufactured by BYK Japan; and KR-513, X-22-2445, X-40-9296, X-22-164, X-22-164A, X-22-164B, X-22-164C, and X-22-164E manufactured by Shin-Etsu Chemical.

### <Ultraviolet Absorbers>

As the ultraviolet absorber, known ultraviolet absorbers such as a benzophenone-based compound, a benzotriazole-based compound, a cyanoacrylate-based compound, a triazine-based compound, a benzoate-based compound, a cinnamic acid ester-based compound, and an oxanilide-based compound can be used. Particularly, a cyanoacrylate-based compound, a benzophenone-based compound, a benzotriazole-based compound, and a cinnamic acid ester-based compound are preferable. The ultraviolet stabilizer is preferably used in an amount of from 0.001 to 5 parts by mass, inclusive, with respect to 100 parts by mass of the curable composition including a photochromic compound and a polymerizable compound.

### <Cured Products>

The cured products are obtained by curing a curable composition. Curing of a curable composition is performed by causing radical polymerization by irradiation with active energy rays such as ultraviolet rays, α rays, β rays, γ rays, and LED; heating; or a combination of both. In other words, an appropriate curing means may be employed depending on the types of the polymerizable monomer and polymerization curing accelerator to be used, and/or the form of the cured product to be formed. When a laminate is formed by a coating method, which is described later, photopolymerization is preferably employed because a uniform film thickness can be obtained.

When thermally polymerizing a curable composition including a polymerizable compound, the thermal polymerization temperature affects the properties of the cured product. This temperature condition is affected by the type and amount of the thermal polymerization initiator and/or the type of the polymerizable compound, and thus cannot be limited to a specific condition. However, in general, a method in which polymerization is started at a relatively low temperature and the temperature is slowly increased is preferable. Since the polymerization time also varies depending on various factors similarly to the temperature, it is preferable to determine the optimum time suitable for these conditions in advance. It is generally preferable to select the conditions so that the polymerization is completed in from 2 to 48 hours. In the case of obtaining a photochromic laminated sheet, it is preferable to perform polymerization at a temperature at which a reaction between polymerizable functional groups proceeds, and determine the optimum temperature and time so that a desired molecular weight is obtained in the reaction.

When photopolymerizing a curable composition, among the polymerization conditions, UV intensity particularly affects the properties of the resulting photochromic cured product. This illuminance condition is affected by the type and amount of the photopolymerization initiator and the type of the polymerizable monomer, and thus cannot be limited to a specific condition. However, it is generally preferable to select the conditions in which UV light of from 50 to 500 mW/cm², inclusive, is radiated for from 0.5 to 5 minutes, inclusive, at a wavelength of 365 nm.

A biobased plastic content of the cured product is preferably 25 mass% or more. The biobased plastic content can be calculated by a method according to ISO 16620-3. The biobased plastic content of the cured product is preferably 30 mass% or more, and more preferably 40 mass% or more. The upper limit of the biobased plastic content is not particularly limited, but is 100 mass% or less in one example, and 80 mass% or less in another example.

### <Laminates>

According to another embodiment, a laminate is provided. The laminate includes an optical substrate and a cured product according to the embodiment located on a surface of the optical substrate. The optical substrate includes, for example, a resin such as a diallyl carbonate resin, a urethane resin, or a thiourethane resin. The optical substrate may be a lens substrate. The optical substrate may have a primer layer between the laminate and the cured product. The primer layer includes a urethane resin.

A biobased plastic content of the optical substrate is preferably 25 mass% or more. The biobased plastic content can be calculated by a method according to ISO 16620-3. The biobased plastic content of the optical substrate is preferably 30 mass% or more, and more preferably 40 mass% or more. The upper limit of the biobased plastic content is not particularly limited, but is 100 mass% or less in one example, and 80 mass% or less in another example.

FIG. 1 is a cross-sectional view schematically showing an example of a laminate according to an embodiment. A laminate 10 shown in FIG. 1 includes an optical substrate 11, a primer layer 1 provided on one main surface of the optical substrate 11, and a functional resin layer 12 provided on a main surface of the primer layer 1. The functional resin layer 12 includes the cured product according to the embodiment. The optical substrate 11 is a positive meniscus lens having a concavo-convex shape.

### <Optical Articles>

The cured product according to the embodiment can be widely used as an optical article, for example, as various memory materials replacing a silver salt photosensitive material; various memory materials such as a copying material, a photoreceptor for printing, a memory material for a cathode ray tube, a photosensitive material for laser, and a photosensitive material for holography; and a lens. The lens is suitable for eyeglasses. The photochromic cured product including a photochromic compound can also be used as a photochromic lens material, an optical filter material, a display material, and a material for photometers or decorations, and the like.

The cured product according to the embodiment is particularly suitable for photochromic lens application. The photochromic lens is suitable as an eyeglass lens such as a sunglass lens. As a method for producing the photochromic lens, a known method can be employed as long as uniform light control performance can be obtained.

In the case of expressing photochromic properties by a kneading method, a photochromic cured product molded into a form of an optical material, such as a lens, can be obtained by the following manner: the above-described curable composition is injected between glass molds held by an elastomer gasket or a spacer, and casting polymerization is carried out by heating in an air furnace or irradiation with active energy ray such as ultraviolet rays, depending on the type of the polymerizable compound or the polymerization curing accelerator.

In the case of expressing photochromic properties by a lamination method, a photochromic layer composed of the photochromic cured product is formed on the surface of an optical substrate by the following manner (coating method): a curable composition is appropriately dissolved in an organic solvent to prepare a coating solution, the coating solution is applied to the surface of the optical substrate such as a lens substrate by spin coating or dipping, the resulting coating is dried to remove the organic solvent, and then polymerization curing is carried out by UV irradiation or heating in an inert gas such as nitrogen.

In addition, the photochromic layer composed of a photochromic cured product can also be formed on the surface of an optical substrate by casting polymerization using an inner mold, where an optical substrate such as a lens substrate is disposed so as to face a glass mold so that a predetermined gap is formed, a curable composition is injected into this gap, and polymerization curing is carried out by UV radiation, heating, or the like in this state (casting polymerization method).

When forming a photochromic layer on the surface of an optical substrate by the lamination method (coating method and casting polymerization method) as described above, adhesion between the photochromic layer and the optical substrate can also be enhanced by performing a chemical treatment with an alkali solution, an acid solution, or the like, or a physical treatment with corona discharge, plasma discharge, polishing, or the like on the surface of the optical substrate, in advance. Obviously, it is also possible to provide a transparent adhesive resin layer on the surface of the optical substrate.

The cured product formed of the curable composition may be subjected to post-processing depending on its use. Examples of the post-processing include: dyeing using a dye such as a dispersed dye; laminating a protective layer containing a urethane resin, an epoxy resin, or the like; formation of a hard coat film using a silane coupling agent and/or a hard coat agent which contains a sol of silicon, zirconium, antimony, aluminum, tin, tungsten, or the like as a main component; thin film formation by vapor deposition of a metal oxide such as SiO₂, TiO₂, or ZrO₂; an antireflection treatment using a thin film obtained by application of an organic polymer; and an antistatic treatment.

### EXAMPLES

Next, the present invention will be described in detail with reference to Examples and Comparative Examples, but the present invention is not limited to these Examples. Notations, evaluation methods, and the like of components are as follows.

### <Ingredients>

### Component (A)

### Component (A-1)

GT-A: glycerin triacrylate
GT-MA: glycerin trimethacrylate
GT-MA1A: glycerin dimethacrylate acrylate
GT-MA3EO: ethoxylated glycerin trimethacrylate (number average molecular weight: 428)
G2-4A: diglycerin tetraacrylate
G2-4MA: diglycerin tetramethacrylate
G2-4AE: ethoxylated diglycerin tetraacrylate (number average molecular weight: 559)
G2-4MAE: ethoxylated diglycerin tetramethacrylate (number average molecular weight: 615)
G2-4MA6E: ethoxylated diglycerin tetramethacrylate (number average molecular weight: 1438)
G3-4MA: mixture of triglycerin tetramethacrylate:triglycerin pentamethacrylate = 78:22
G3-5MA: triglycerin pentamethacrylate

### Component (A-2)

14G: polyethylene glycol dimethacrylate (number average molecular weight: 770)
A-PTMG65: polytetramethylene glycol diacrylate (number average molecular weight: 775)
M-PTMG65: polytetramethylene glycol dimethacrylate (number average molecular weight: 803)
M-PTMG65Bio: polytetramethylene glycol dimethacrylate (number average molecular weight: 803, biobased plastic content: 76.8 mass%) using polytetramethylene glycol having a biobased plastic content of 95 mass%
A-PTMG100: polytetramethylene glycol diacrylate (number average molecular weight: 1128)
M-PTMG100: polytetramethylene glycol dimethacrylate (number average molecular weight: 1156)
M-PTMG100Bio: polytetramethylene glycol dimethacrylate (number average molecular weight: 1171, biobased plastic content: 82.5 mass%) using polytetramethylene glycol having a biobased plastic content of 95 mass%
A-PTMG200Bio: polytetramethylene glycol diacrylate (number average molecular weight: 2123, biobased plastic content: 90.1 mass%) using polytetramethylene glycol having a biobased plastic content of 95 mass%
M-EGTMG160: dimethacrylate of the following formula: 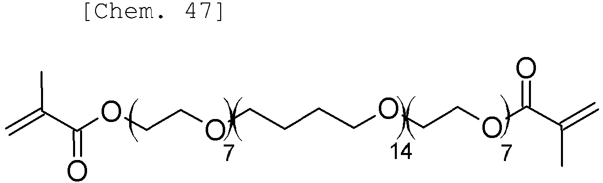
   M-EGTMG130: dimethacrylate of the following formula: 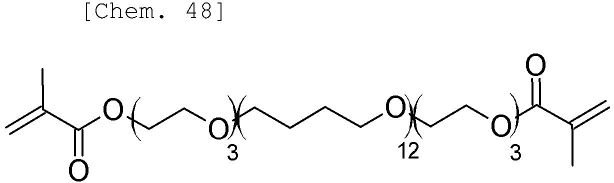
   PTG25CD100: dimethacrylate of the following formula:

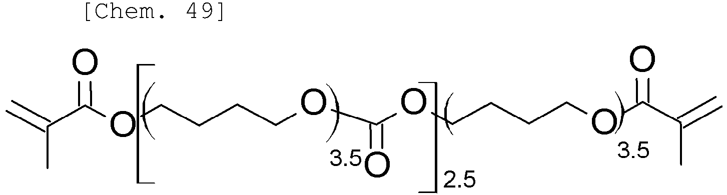

### (Synthesis of PTG25CD100)

330 mL of dehydrated toluene, 1.0 mg of p-methoxyphenol, and 2.86 g of p-toluenesulfonic acid monohydrate were added to 100 g of NT1002 (manufactured by Mitsubishi Chemical Corporation) having a molecular weight of 1,000 determined from the hydroxy value and the resulting mixture was stirred.
18.9 g of methacrylic acid was added to the obtained mixture and the resulting mixture was reacted under azeotropic conditions for 20 hours. After completion of the reaction, 1,000 mL of a 5% aqueous sodium hydrogen carbonate solution was added, and liquid separation was performed. Celite was added to the obtained organic layer and the obtained mixture was stirred and then filtered. To the obtained organic layer, 20 g of Wacogel 60 N was added and the obtained mixture was stirred and then filtered. To the obtained organic layer, 1 mL of a 0.1 mg/mL p-methoxyphenol toluene solution was added, and the obtained mixture was concentrated to synthesize PTG25CD100.

In the proton nuclear magnetic resonance spectrum measured, peaks of about 55H based on the tetramethyleneoxy groups and the methacrylic groups appeared at about δ 1.0 to 2.5 ppm, peaks of about 49H based on the tetramethyleneoxy groups appeared at about δ 3.0 to 4.5 ppm, and peaks of 4H based on the acrylic protons appeared at about δ 5.5 to 6.5 ppm.

PTG65CD200: dimethacrylate of the following formula:

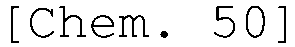

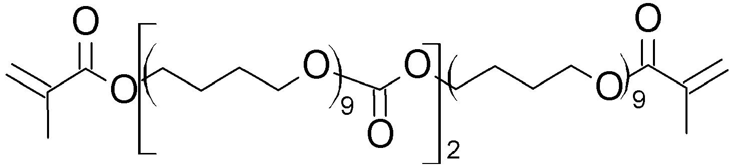

### (Synthesis of PTG65CD200)

PTG65CD200 was synthesized in the same manner as in the synthesis of PTG25CD100 except that NT2006 was used instead of NT1002.

In the proton nuclear magnetic resonance spectrum measured, peaks of about 114H based on the tetramethyleneoxy groups and the methacrylic groups appeared at about δ 1.0 to 2.5 ppm, peaks of about 108H based on the tetramethyleneoxy groups appeared at about δ 3.0 to 4.5 ppm, and peaks of 4H based on the acrylic protons appeared at about δ 5.5 to 6.5 ppm.

UA-PTMG65: diacrylate of the following formula:

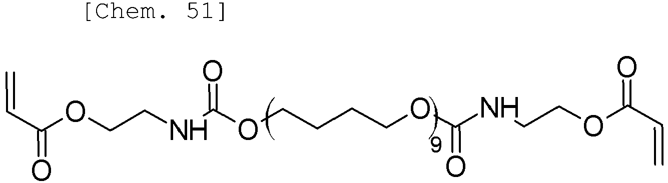

### (Synthesis of UA-PTMG65)

To 65 g of polytetramethylene ether glycol having a molecular weight of 650 determined from the hydroxy value, 250 mL of dehydrated toluene was added and azeotropic dehydration was performed. After the azeotropic dehydration, 50 mL of toluene was distilled off from the toluene solution and then, the solution was cooled to 60°C.
19.5 mg of p-methoxyphenol and 6.5 mg of dibutyltin dilaurate were added to the cooled solution. To this solution, 13.9 g of 2-acryloyloxyethyl isocyanate was slowly added dropwise. After the dropwise addition, the mixture was reacted at 60 to 65°C for 10 hours to obtain a reaction solution.
100 mL of water was added to the reaction mixture, and liquid separation was performed. Celite was added to the obtained organic layer, and the obtained mixture was stirred and then filtered. The obtained organic layer was concentrated to give UA-PTMG65.

In the proton nuclear magnetic resonance spectrum measured, peaks of about 36H based on the tetramethyleneoxy groups appeared at about δ 1.0 to 2.0 ppm, peaks of about 44H based on the tetramethyleneoxy groups and the ethylene oxide groups appeared at about δ 3.0 to 4.5 ppm, and peaks of 6H based on the acrylic protons appeared at about δ 5.5 to 6.5 ppm.

APC56: diacrylate (number average molecular weight: 606) of polycarbonatediol obtained by phosgenation of pentamethylene glycol and hexamethylene glycol

### (A-3)

A-TMPT: trimethylolpropane triacrylate
TMPT: trimethylolpropane trimethacrylate
TMPT-20E: ethoxylated trimethylolpropane trimethacrylate
(number average molecular weight: 1218)
DPE6MA-6EO: ethoxylated dipentaerythritol hexamethacrylate
(number average molecular weight: 927)
D-TMP: ditrimethylolpropane tetramethacrylate

### (A-4)

LA82: 1,2,2,6,6-pentamethyl-4-piperidyl methacrylate
TSL: γ-methacryloyloxypropyltrimethoxysilane

### (Other Radically Polymerizable Monomers)

RX-1: polyrotaxane having acryloyl groups
Polyrotaxane having acryloyl groups that satisfies the following properties was synthesized according to the method described in PCT International Publication No. WO 2018/030257. Weight average molecular weight Mw (GPC) of the polyrotaxane (RX-1) having acryloyl groups: 180,000
Acryloyl group modification proportion in side chains: 80 mol% Proportion of OH groups remaining in the side chains: 20 mol% Axial molecule: linear polyethylene glycol (PEG) with a molecular weight of 11,000
Inclusion ring: α-cyclodextrin (α-CD), introduction ratio: 0.25
Ends of the axial molecule: sealed with adamantane. Side chains introduced into the inclusion rings: (average) molecular weight of side chains: about 500
Number of acryloyl groups per molecule: about 90

Weight average molecular weight Mw of the polyrotaxane (RX-1) was measured by gel permeation chromatography (GPC method). As an apparatus, a liquid chromatography apparatus (manufactured by Nihon Waters) was used. As a column, two columns of TSKgel SuperHM-M (exclusion limit molecular weight: 4,000,000, manufactured by Tosoh) were used in series.

Tetrahydrofuran was used as a developing solution, and the measurement was performed under the conditions of a flow rate of 0.6 ml/min and a temperature of 40°C. When polystyrene was used as the standard sample and the weight average molecular weight was determined by comparative conversion, the weight average molecular weight of RX-1 was 180,000.

SO-1: silsesquioxane having methacryloyl groups and having the following properties:
Number of methacrylate groups per molecule: 20
Weight average molecular weight: 4,800
SO-1 was synthesized by the following method. First, to 248 g (1.0 mol) of 3-trimethoxysilylpropyl methacrylate, 248 ml of ethanol, and 54 g (3.0 mol) of water were added, and 0.20 g (0.005 mol) of sodium hydroxide was added as a catalyst, followed by reaction at 30°C for 3 hours. After confirming the disappearance of the starting material by ¹H-NMR, the reaction mixture was neutralized with a dilute hydrochloric acid solution, 174 ml of toluene, 174 ml of heptane, and 174 g of water were added, and the aqueous layer was removed. Thereafter, the organic layer was washed with water until the aqueous layer became neutral and the solvent was concentrated to obtain SO-1. Note that ²⁹Si-NMR confirmed that SO-1 was a mixture of a cage-like structure, a ladder-like structure, and a random structure.

The weight average molecular weight Mw of SO-1 was measured by gel permeation chromatography (GPC method). As an apparatus, a liquid chromatography apparatus (manufactured by Nihon Waters) was used. As a column, three columns of Shodex GPC KF-802 (exclusion limit molecular weight: 5,000, manufactured by Showa Denko), Shodex GPC KF802.5 (exclusion limit molecular weight: 20,000, manufactured by Showa Denko), and Shodex GPC KF-803 (exclusion limit molecular weight: 70,000, manufactured by Showa Denko) were used in series. In addition, tetrahydrofuran was used as the developing solution, and the measurement was performed under the conditions of a flow rate of 1 ml/min and a temperature of 40°C. Polystyrene was used as a standard sample and the weight average molecular weight was determined by comparison conversion.

### Component (B)

PC1: compound represented by the following formula:
In the following formula, "Me" represents a methyl group:

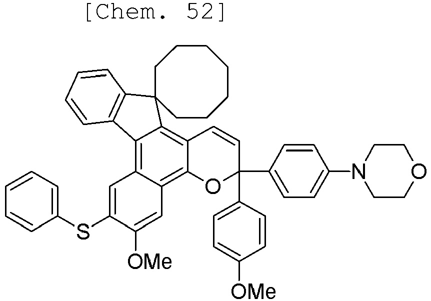

PC2: compound represented by the following formula: In the following formula, "Me" represents a methyl group:

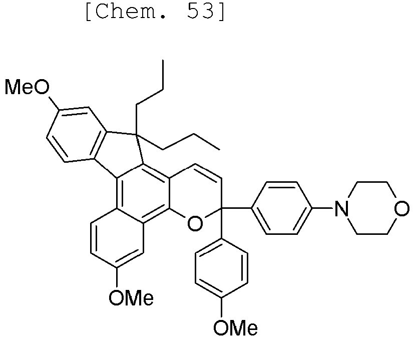

### (Other Additives)

### (Stabilizers)

HALS: bis(1,2,2,6,6-pentamethyl-4-piperidyl) sebacate
HP: ethylene bis(oxyethylene)bis[3-(5-tert-butyl-4-hydroxy-m-tolyl) propionate] (Irganox 245 manufactured by BASF Japan).

### (Photopolymerization Initiator)

PI: phenylbis(2,4,6-trimethylbenzoyl)-phosphine oxide (Omnirad 819 manufactured by IGM).

### <Example 1>

### (Preparation of Photochromic Curable Composition)

First, the following components were prepared according to prescriptions below.

### Components (A)

Component (A-1): GT-A, 28.3 parts by mass
Component (A-2): 14G, 66.1 parts by mass
Component (A-4): TSL, 5.6 parts by mass
   Component (B): PC1, 2.0 parts by mass

### (Other Additives)

### (Polymerization initiator): PI, 0.3 parts by mass

Next, after mixing all the compounds corresponding to the component (A), the component (B) and other additives were mixed to obtain a mixture. To the resulting mixture, 1,000 ppm of a leveling agent L-7001 manufactured by Dow Toray was added and mixed to obtain a photochromic curable composition.

### (Preparation of Optical Articles)

By using this photochromic curable composition, polymerization reaction was carried out as described below to obtain a photochromic laminate by the lamination method.

First, a thiourethane-based plastic lens having a center thickness of 2 mm and a refractive index of 1.60 was prepared as an optical substrate. Note that the thiourethane-based plastic lens was previously subjected to alkali etching at 50°C for 5 minutes using a 5% sodium hydroxide aqueous solution and then was sufficiently washed with distilled water.

A moisture-curable primer (product name: TR-SC-P, manufactured by Tokuyama) was applied onto the surface of the plastic lens using a spin coater (1H-DX2, manufactured by MIKASA) at 70 rpm for 15 seconds and then at 700 rpm for 10 seconds. Thereafter, about 1 g of the photochromic curable composition obtained above was spin-coated so that the film thickness of the photochromic coating layer was 40 µm.

The lens thus coated with the photochromic curable composition (photochromic coating layer) was irradiated with light for 90 seconds using a metal halide lamp having an output of 200 mW/cm² in a nitrogen gas atmosphere to cure the coating film. Thereafter, the laminate was further heated at 90°C for 1 hour to prepare a photochromic laminate having a photochromic layer.

### <Examples 2 to 4 and Comparative Examples 1 to 3>

Photochromic cured products were prepared in the same manner as in Example 1 except that the photochromic curable compositions shown in Tables 1 to 3 were used.

### <Examples 5 to 27 and Comparative Examples 4 to 6>

Photochromic laminates were produced in the same manner as in Example 1 except that the photochromic curable compositions described in Tables 4 to 8 were used, PC2 was used as the component (B), and 0.3 parts by mass of PI, 3 parts by mass of HALS, and 1 part by mass of HP were used as the other additives.

### <Evaluation Methods>

The photochromic laminates obtained in the Examples and the Comparative Examples were evaluated by the following methods. The results are shown in Tables 1 to 8.

### (1) Photochromic Properties

[1] Maximum Absorption Wavelength (λmax (nm)):
   This refers to a maximum absorption wavelength after color development as determined by a spectrophotometer manufactured by Otsuka Electronics (instantaneous multichannel photodetector MCPD 3000) and was used as an index of color tone at the time of color development.
[2] Color Development Density at 23°C (A₂₃):
   This refers to a difference between an absorbance {ε(240)} after light irradiation at 23°C for 240 seconds at the maximum absorption wavelength and an absorbance ε(0) at the time when light irradiation is not carried out and was used as an index of color development density. The photochromic properties can be said to be excellent as this value is high.
[3] 23°C Color Fading Half Life [τ1/2 (sec)]:
   This refers to the time required for an absorbance at the maximum absorption wavelength of a sample to decrease to one half of {ε(300)-ε(0)}, measured after 300 seconds of light irradiation at 23°C and subsequent cessation of the irradiation. This is used as an index of the color fading speed. The shorter this time, the faster the color fading speed.

### (2) Vickers Hardness

Vickers hardness was measured using Micro Vickers Hardness Tester PMT-X7A (manufactured by Matsuzawa Co., Ltd.). A quadrangular pyramidal diamond indenter was used as an indenter, and measurement was performed under the conditions of a load of 10 gf and indenter holding time of 30 seconds. The measurement was performed four times in total and the results are shown as an average value of three times excluding the first value, which has a large measurement error.

### [Table 1]

**table 1**

| | Curable composition | | | Photochromic layer | | | |
|---|---|---|---|---|---|---|---|
| | Trifunctional (meth)acrylate (Blending amount) | Bifunctional (meth)acrylate (Blending amount) | Monofunctional (meth)acrylate (Blending amount) | Maximum absorption wavelength (nm) | 23°C color density (-) | 23°C color fading half life (sec) | Vickers hardness |
| Example 1 | GT-A(28.3) | 14G(66.1) | TSL(5.6) | 593 | 0.84 | 61 | 6.5 |
| Example 2 | GT-A(28.3) | A-PTMG65(66.1) | TSL(5.6) | 585 | 0.75 | 44 | 6.0 |
| Comparative Example 1 | A-TMPT(28.3) | 14G(66.1) | TSL(5.6) | 591 | 0.81 | 68 | 3.3 |

[Table 2]

**table 2**

| | Curable composition | | | Photochromic layer | | | |
|---|---|---|---|---|---|---|---|
| | Trifunctional (meth)acrylate (Blending amount) | Bifunctional (meth)acrylate (Blending amount) | Monofunctional (meth)acrylate (Blending amount) | Maximum absorption wavelength (nm) | 23°C color density (-) | 23°C color fading half life (sec) | Vickers hardness |
| Example 3 | GT-A(47.2) | 14G(47.2) | TSL(5.6) | 591 | 0.80 | 110 | 11.4 |
| Comparative Example 2 | A-TMPT(47.2) | 14G(47.2) | TSL(5.6) | 590 | 0.69 | 133 | 7.0 |

### [Table 3]

**table 3**

| | Curable composition | | | Photochromic layer | | | |
|---|---|---|---|---|---|---|---|
| | Trifunctional (meth)acrylate (Blending amount) | Bifunctional (meth)acrylate (Blending amount) | Monofunctional (meth)acrylate (Blending amount) | Maximum absorption wavelength (nm) | 23°C color density (-) | 23°C color fading half life (sec) | Vickers hardness |
| Example 4 | GT-A(66.0) | 14G(28.3) | TSL(5.6) | 590 | 0.69 | 220 | 14.4 |
| Comparative Example 3 | A-TMPT(66.0) | 14G(28.3) | TSL(5.6) | 588 | 0.53 | 279 | 10.9 |

### [Table 4]

**table 4**

| | Curable composition | | | Photochromic layer | | | |
|---|---|---|---|---|---|---|---|
| | Trifunctional (meth)acrylate (Blending amount) | Bifunctional (meth)acrylate (Blending amount) | Monofunctional (meth)acrylate (Blending amount) | Maximum absorption wavelength (nm) | 23°C color density (-) | 23°C color fading half life (sec) | Vickers hardness |
| Example 5 | GT-MA(28.3) | A-PTMG65(66.1) | TSL(5.6) | 609 | 1.14 | 42 | 4.3 |
| Example 6 | GT-MA(28.3) | M-PTMG65(66.1) | TSL(5.6) | 606 | 1.16 | 49 | 4.7 |
| Example 7 | GT-MA3EO(28.3) | M-PTMG65(66.1) | TSL(5.6) | 607 | 1.16 | 46 | 4.2 |
| Example 8 | GT-MA1A(28.3) | M-PTMG65(66.1) | TSL(5.6) | 607 | 1.11 | 51 | 4.3 |
| Example 9 | GT-MA(28.3) | A-PTMG65(40.0) | TSL(5.6) | 608 | 1.18 | 53 | 4.7 |
| | | UA-PTMG65 (26.1) | | | | | |
| Example 10 | GT-MA(28.3) | M-PTMG65Bio(66.1) | TSL(5.6) | 606 | 1.16 | 49 | 4.7 |
| Comparative Example 4 | TMPT(28.3) | M-PTMG65(66.1) | TSL(5.6) | 605 | 1.14 | 52 | 3.7 |

### [Table 5]

**table 5**

| | Curable composition | | | Photochromic layer | | | |
|---|---|---|---|---|---|---|---|
| | Trifunctional (meth)acrylate (Blending amount) | Bifunctional (meth)acrylate (Blending amount) | Monofunctional (meth)acrylate (Blending amount) | Maximum absorption wavelength (nm) | 23°C color density (-) | 23°C color fading half life (sec) | Vickers hardness |
| Example 11 | GT-MA (47.2) | A-PTMG65 (47.2) | TSL(5.6) | 607 | 1.16 | 46 | 7.5 |
| Example 12 | GT-MA1A(47.2) | A-PTMG65 (47.2) | TSL(5.6) | 608 | 1.14 | 48 | 7.0 |
| Example 13 | GT-MA (28. 3) | M-PTMG65Bio(33.1) | TSL(5.6) | 606 | 1.17 | 50 | 3. 9 |
| | TMPT-20E (33.0) | | | | | | |
| Example 14 | GT-MA (14.2) | M-PTMG65 (66.1) | TSL(5.6) | 607 | 1.15 | 51 | 3.9 |
| | DPE6MA-6EO (14.1) | | | | | | |
| Example 15 | GT-MA (18.9) | - | TSL(5.6) | 608 | 1.13 | 49 | 2. 6 |
| | TMPT-20E (75.5) | | | | | | |

### [Table 6]

**table 6**

| | Curable composition | | | Photochromic layer | | | |
|---|---|---|---|---|---|---|---|
| | Trifunctional (meth) acrylate (Blending amount) | Bifunctional (meth) acrylate (Blending amount) | Monofunctional (meth) acrylate (Blending amount) | Maximum absorption wavelength (nm) | 23°C color density (-) | 23°C color fading half life (sec) | Vickers hardness |
| Example 16 | GT-MA (18.9) | M-PTMG100 (47.2) | TSL(5.6) | 606 | 1.16 | 46 | 2.3 |
| | | 14G(28.3) | | | | | |
| Comparative Example 5 | TMPT(18.9) | M-PTMG100 (47.2) | TSL(5.6) | 605 | 1.15 | 48 | 2.1 |
| | | 14G(28.3) | | | | | |

### [Table 7]

**table 7**

| | Curable composition | | | Photochromic layer | | | |
|---|---|---|---|---|---|---|---|
| | Trifunctional (meth) acrylate (Blending amount) | Bifunctional (meth) acrylate (Blending amount) | Monofunctional (meth) acrylate (Blending amount) | Maximum absorption wavelength (nm) | 23°C color density (-) | 23°C color fading half life (sec) | Vickers hardness |
| Example 17 | GT-MA (7.6) | A-PTMG65 (20.8) | TSL(5.6) | 609 | 1.14 | 44 | 1. 7 |
| | TMPT-20E (66.0) | | | | | | |
| Comparative Example 6 | TMPT(7.6) | A-PTMG65 (20.8) | TSL(5.6) | 607 | 1.13 | 45 | 1.5 |
| | TMPT-20E(66.0) | | | | | | |

### [Table 8]

**table 8**

| | Curable composition | | | | Photochromic layer | | | |
|---|---|---|---|---|---|---|---|---|
| | Trifunctional (meth) acrylate (Blending amount) | Bifunctional (meth) acrylate (Blending amount) | Monofunctional (meth)acrylate (Blending amount) | Others (Blending amount) | Maximum absorption wavelength (nm) | 23°C color density (-) | 23°C color fading half life (sec) | Vickers hardness |
| Example 18 | GT-MA(28.3) | A-PTMG200Bio(66.1) | TSL(5. 6) | - | 608 | 1.11 | 40 | 1.9 |
| Example 19 | GT-MA(28.3) | M-PTMG100(66.1) | TSL(5. 6) | - | 606 | 1.16 | 45 | 3.7 |
| Example 20 | GT-MA(28.3) | PTG25CD100(66.1) | TSL(5. 6) | - | 607 | 1.16 | 46 | 4.0 |
| Example 21 | GT-MA(28.3) | M-EGTMG160(66.1) | TSL(5. 6) | - | 604 | 1.15 | 42 | 2.5 |
| Example 22 | GT-MA(28.3) | PTG65CD200(66.1) | TSL(5. 6) | - | 605 | 1.11 | 42 | 2.5 |
| Example 23 | GT-MA(28.3) | M-PTMG100(41.3) | TSL(5. 6) | - | 606 | 1.16 | 47 | 3.7 |
| | | 14G(24.8) | | | | | | |
| Example 24 | GT-MA(310) | M-EGTMG130(37.8) | TSL(5.6) | RX-1(2.0) | 605 | 1.15 | 49 | 4.2 |
| | | 14G(23.6) | | | | | | |
| Example 25 | GT-MA(33.0) | M-EGTMG130(36.3) | TSL(5. 6) | - | 606 | 1.16 | 48 | 4.5 |
| | | 14G(22.1) | LA-82(3.0) | | | | | |
| Example 26 | GT-MA(27.3) | M-PTMG100Bio(27.1) | TSL(5. 6) | SO-1 (4.0) | 604 | 1.13 | 48 | 4.1 |
| | | 14G(17.0) | | | | | | |
| | TMPT-20E (10.0) | APC56(9.0) | | | | | | |
| Example 27 | GT-MA (80.3) | A-PTMG65 (14.1) | TSL(5. 6) | - | 606 | 1.15 | 72 | 13.5 |

### <Example 28>

### (Preparation of Photochromic Curable Composition)

First, the following components were prepared according to prescriptions below. Component (A)
Component (A-1): G2-4A, 28.3 parts by mass
Component (A-2): 14G, 66.1 parts by mass
Component (A-4): TSL, 5.6 parts by mass

   Component (B): PC1, 2.0 parts by mass

### (Other Additives)

(Polymerization initiator): PI, 0.3 parts by mass Next, after mixing all the compounds corresponding to the component (A), the component (B) and other additives were mixed to obtain a mixture. To the resulting mixture, 1,000 ppm of a leveling agent L-7001 manufactured by Dow Toray was added and mixed to obtain a photochromic curable composition.

### (Preparation of Optical Articles)

By using this photochromic curable composition, a polymerization reaction was carried out as described below to obtain a photochromic laminate by the lamination method.

First, a thiourethane-based plastic lens having a center thickness of 2 mm and a refractive index of 1.60 was prepared as an optical substrate. The thiourethane-based plastic lens was previously subjected to alkali etching at 50°C for 5 minutes using a 5% sodium hydroxide aqueous solution and, then, was sufficiently washed with distilled water.

A moisture-curable primer (product name: TR-SC-P, manufactured by Tokuyama) was applied onto the surface of the plastic lens using a spin coater (1H-DX2, manufactured by MIKASA) at 70 rpm for 15 seconds and then at 700 rpm for 10 seconds. Thereafter, about 1 g of the photochromic curable composition obtained above was spin-coated so that the film thickness of the photochromic coating layer was 40 µm.

The lens thus coated with the photochromic curable composition (photochromic coating layer) was irradiated with light for 90 seconds using a metal halide lamp having an output of 200 mW/cm² in a nitrogen gas atmosphere to cure the coating film. Thereafter, the laminate was further heated at 90°C for 1 hour to prepare a photochromic laminate having a photochromic layer. Evaluation was carried out in the same manner as described above, and the results are shown in Table 9.

### <Examples 29 to 31, 44, and 45 and Comparative Examples 6 to 8>

Photochromic cured products were prepared in the same manner as in Example 28 except that the photochromic curable compositions shown in Tables 9 to 11 and Table 13 were used.

### <Examples 32 to 43 and 46 to 50, and Comparative Examples 9 and 10>

Photochromic laminates were produced in the same manner as in Example 28 except that the photochromic curable compositions described in Tables 12 and 13 were used, PC2 was used as the component (B), and 0.3 parts by mass of PI, 3 parts by mass of HALS, and 1 part by mass of HP were used as the other additives.

### [Table 9]

**table 9**

| | Curable composition | | | | Cured product | Photochromic properties | | |
|---|---|---|---|---|---|---|---|---|
| | A-1 (Blending amount) | A-2 (Blending amount) | A-3 (Blending amount) | A-4 (Blending amount) | Vickers hardness | Maximum absorption wavelength (nm) | 23°C color density (-) | 23°C color fading half life (sec) |
| Example 28 | G2-4A(28.3) | 14G (66.1) | - | TSL(5.6) | 4.4 | 593 | 0.85 | 60 |
| Comparative Example 6 | - | 14G (66.1) | A-TMPT(28.3) | TSL(5.6) | 3.3 | 591 | 0.81 | 68 |

### [Table 10]

**table 10**

| | Curable composition | | | | Cured product | Photochromic properties | | |
|---|---|---|---|---|---|---|---|---|
| | A-1 (Blending amount) | A-2 (Blending amount) | A-3 (Blending amount) | A-4 (Blending amount) | Vickers hardness | Maximum absorption wavelength (nm) | 23°C color density (-) | 23°C color fading half life (sec) |
| Example 29 | G2-4A (47.2) | 14G (47.2) | - | TSL(5.6) | 7.8 | 591 | 0.81 | 114 |
| Comparative Example 7 | - | 14G (47.2) | A-TMPT (47.2) | TSL(5.6) | 7.0 | 590 | 0.69 | 133 |

### [Table 11]

**table 11**

| | Curable composition | | | | Cured product | Photochromic properties | | |
|---|---|---|---|---|---|---|---|---|
| | A-1 (Blending amount) | A-2 (Blending amount) | A-3 (Blending amount) | A-4 (Blending amount) | Vickers hardness | Maximum absorption wavelength (nm) | 23°C color density (-) | 23°C color fading half life (sec) |
| Example 30 | G2-4A (66.0) | 14G (28.3) | - | TSL(5.6) | 11.7 | 592 | 0.70 | 229 |
| Example 31 | G2-4AE (66.0) | 14G (28.3) | - | TSL(5.6) | 6.6 | 593 | 0.68 | 196 |
| Comparative Example 8 | - | 14G (28.3) | A-TMPT (66.0) | TSL(5.6) | 10.9 | 588 | 0.53 | 279 |

### [Table 12]

**table 12**

| | Curable composition | | | | Cured product | Photochromic properties | | |
|---|---|---|---|---|---|---|---|---|
| | A-1 (Blending amount) | A-2 (Blending amount) | A-3 (Blending amount) | A-4 (Blending amount) | Vickers hardness | Maximum absorption wavelength (nm) | 23°C color density (-) | 23°C color fading half life (sec) |
| Example 32 | G2-4MA(28.3) | M-PTMG65(66.1) | - | TSL(5.6) | 4.4 | 605 | 1.15 | 51 |
| Example 33 | G2-4MA(14.1) | M-PTMG65(66.1) | D-TMP (14.2) | TSL(5.6) | 3.9 | 606 | 1.14 | 53 |
| Example 34 | G2-4MA(28.3) | M-PTMG100(66.1) | - | TSL(5.6) | 3.7 | 605 | 1.15 | 46 |
| Example 35 | G2-4MA(28.3) | M-PTMG65Bio(66.1) | - | TSL(5.6) | 4.4 | 605 | 1.15 | 51 |
| Example 36 | G2-4MAE(28.3) | M-PTMG65(66.1) | | TSL(5.6) | 3.2 | 604 | 1.16 | 48 |
| Example 37 | G3-4MA(28.3) | M-PTMG65(66.1) | - | TSL(5.6) | 3.6 | 606 | 1.15 | 50 |
| Example 38 | G3-5MA(28.3) | M-PTMG65(66.1) | - | TSL(5.6) | 4.2 | 605 | 1.15 | 53 |
| Example 39 | G2-4MA6E(28.3) | M-PTMG65(66.1) | | TSL(5.6) | 1.3 | 605 | 1.15 | 43 |
| Example 40 | G2-4MA(28.3) | A-PTMG65(66.1) | - | TSL(5.6) | 4.0 | 607 | 1.12 | 44 |
| Example 41 | G2-4MA(28.3) | M-PTMG200Bio(66.1) | - | TSL(5.6) | 2.6 | 607 | 1.12 | 42 |
| Example 42 | G3-5MA(28.3) | M-PTMG85(66.1) | - | TSL(5.6) | 3.7 | 606 | 1.16 | 49 |
| Example 43 | G2-4MA(28.3) | M-PTMG65(33.0) | - | TSL(5.6) | 3.7 | 608 | 1.15 | 45 |
| | | PTG65CD200(33.1) | | | | | | |
| Comparative Example 9 | - | M-PTMG65(66.1) | TMPT(28.3) | TSL(5.6) | 3.7 | 605 | 1.14 | 53 |
| Comparative Example 10 | - | M-PTMG65(66.1) | TMPT (14.1) | TSL(5.6) | 3.6 | 606 | 1.13 | 56 |
| | | | D-TMP(14.2) | | | | | |

### [Table 13]

**table 13**

| | Curable composition | | | | | | | Cured product | Photochromic properties | | |
|---|---|---|---|---|---|---|---|---|---|---|---|
| | A-1(Blending amount) | A-2 (Blending amount) | A-3 (Blending amount) | A-4 (Blending amount) | Others (Blending amount) | Component B (Blending amount) | Additives (Blending amount) | Vickers hardness | Maximum absorption wavelength (nm) | 23°C color density (-) | 23°C color fading half life (sec) |
| Example 44 | G2-4AE (47.2) | A-PTMG65 (47.2) | - | TSL(5. 6) | - | PC1 (2.0) | PI (0.3) | 3.7 | 587 | 0.83 | 45 |
| Example 45 | G2-4MAE(47.2) | A-PTMG65 (47.2) | - | TSL(5. 6) | - | PC1 (2.0) | PI (0.3) | 4.7 | 585 | 0.95 | 41 |
| Example 46 | G2-4MA6E(75.5) | - | DPE6MA-6EO (18.9) | TSL(5. 6) | - | PC2 (1.6) | HALS (3) | 2.6 | 607 | 1.15 | 47 |
| | | | | | | | HP(1) | | | | |
| | | | | | | | PI (0.3) | | | | |
| Example 47 | G2-4MA (18.9) | - | TMPT-20E (75.5) | TSL(5. 6) | - | PC2(1.6) | HALS (3) | 3.3 | 607 | 1.15 | 49 |
| | | | | | | | HP(1) | | | | |
| | | | | | | | PI (0.3) | | | | |
| Example 48 | G2-4MA (18 . 9) | - | - | TSL(5. 6) | - | PC2 (1.6) | HALS (3) | 3.4 | 607 | 1.15 | 48 |
| | | | | | | | HP(1) | | | | |
| | G2-4MA6E(75.5) | | | | | | PI (0.3) | | | | |
| Example 49 | G2-4MA(27.3) | M-PTMG100Bio(27.1) | TMPT-20E (10.0) | TSL(5.6) | SO-1 (4.0) | PC2 (1.6) | HALS (3) | 3.7 | 604 | 1.13 | 51 |
| | | 14G(17.0) | | | | | HP(1) | | | | |
| | | APC56(9.0) | | | | | PI (0.3) | | | | |
| Example 50 | G3-4MA(31.0) | M-EGTMG130(37.8) | - | TSL(5.6) | RX-1(2.0) | PC2 (1.6) | HALS (3) | 4.0 | 605 | 1.15 | 52 |
| | | 14G (23. 6) | | | | | HP(1) | | | | |
| | | | | | | | PI (0.3) | | | | |

As is clear from Tables 1 to 13, in comparison of the Examples and the Comparative Examples using the same photochromic compounds, the curable compositions using the first radically polymerizable monomer represented by the formula (1) of the present invention had excellent photochromic properties, particularly excellent color fading speed. The cured products also had high hardness.

Preferred embodiments of the present disclosure are set forth below.
[1] A curable composition including a first radically polymerizable monomer represented by the following formula (1) and a functional dye: 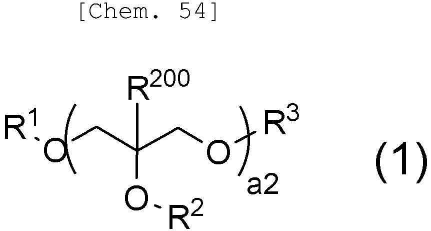 in which R¹ and R³ each independently represent monovalent groups represented by the following formula (2);
   a2 is 1, or a number of 2 or more and 10 or less;
   R²⁰⁰ represents a hydrogen atom or a methyl group;
   when a2 is 1, R² represents a monovalent group represented by the following formula (2);
   when a2 is 2 or more and 10 or less, R² each represents a monovalent group represented by the following formula (2) or a hydrogen atom, and at least one of the plurality of R² represents a monovalent group represented by the following formula (2);
   the plurality of monovalent groups represented by the following formula (2) may be the same as or different from each other: 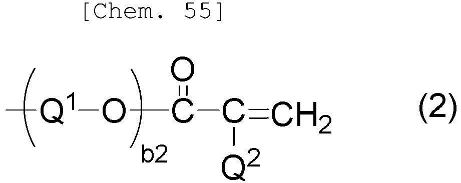 in which
      Q¹ represents a linear or branched alkylene group having 1 or more and 6 or less carbon atoms;
      Q² represents a hydrogen atom or a methyl group; and b2 is 0, or 1 or more and 15 or less.
[2] The curable composition as described in [1], in which a proportion of the first radically polymerizable monomer in the curable composition is 5 mass% or more and 95 mass% or less.
[3] The curable composition as described in [1] or [2], in which a proportion of the functional dye in the curable composition is 0.001 mass% or more and 10 mass% or less.
[4] The curable composition as described in any one of [1] to [3], in which the first radically polymerizable monomer includes a compound represented by the following formula (1a): 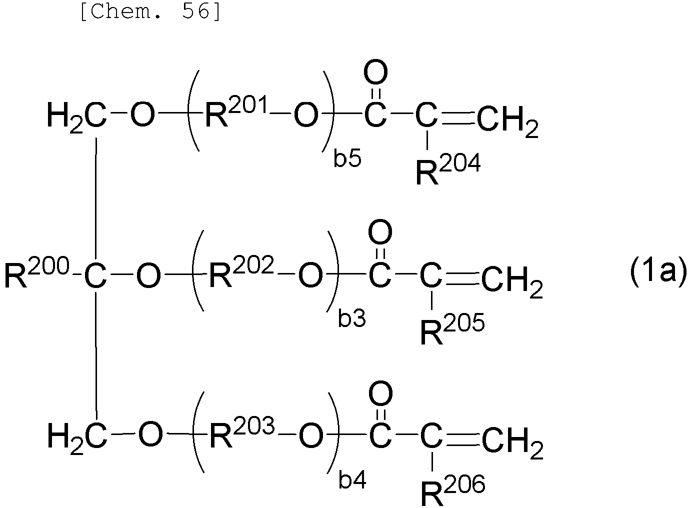 in which
   R²⁰⁰ represents a hydrogen atom or a methyl group;
   R²⁰¹, R²⁰², and R²⁰³ each independently represent a linear or branched alkylene group having 1 or more and 6 or less carbon atoms;
   R²⁰⁴, R²⁰⁵ and R²⁰⁶ each independently represent a hydrogen atom or a methyl group; and
   b3, b4, and b5 are each independently 0, or 1 or more and 4 or less.
[5] The curable composition as described in any one of [1] to [4], further including a second radically polymerizable monomer having at least one polyalkylene glycol chain structure having a number average molecular weight of 250 or more and two (meth)acryloyl groups in one molecule.
[6] The curable composition as described in [5], in which the second radically polymerizable monomer includes a di(meth)acrylate represented by the following formula (3): 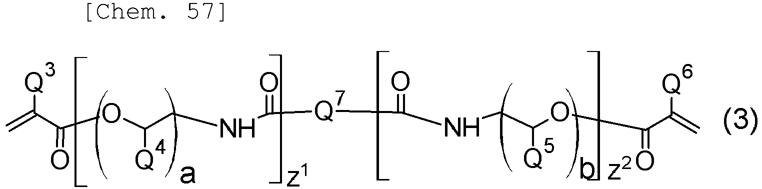 in which
   Q³ and Q⁶ each independently represent a hydrogen atom or a methyl group;
   Q⁴ and Q⁵ each independently represent a hydrogen atom or an alkyl group having 1 or more and 3 or less carbon atoms;
   Q⁷ represents a divalent group having a number average molecular weight of 250 or more represented by the following formula (3a);
   a and b are each independently 0 or more and 10 or less; and
   Z¹ and Z² are each independently 0 or 1: 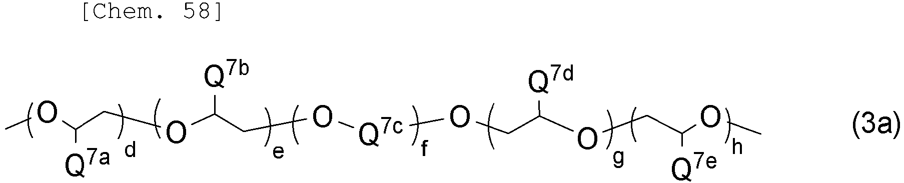 in which
      Q^{7a}, Q^{7b}, Q^{7d}, and Q^{7e} each independently represent a hydrogen atom or an alkyl group having 1 or more and 3 or less carbon atoms;
      Q^{7d} and Q^{7e} are different groups from each other and Q^{7a} and Q^{7e} are different groups from each other;
      Q^{7c} represents a linear or branched alkylene group having 2 or more and 20 or less carbon atoms which may have a substituent; d and h are 0 or more and 10 or less;
      e and g are 0 or more and 20 or less; and
      f is 3 or more and 100 or less.
[7] The curable composition as described in any one of [1] to [6], further including a third radically polymerizable monomer having 3 or more (meth)acryloyl groups in one molecule.
[8] The curable composition as described in [7], in which the third radically polymerizable monomer includes a polyfunctional (meth)acrylate represented by the following formula (I): 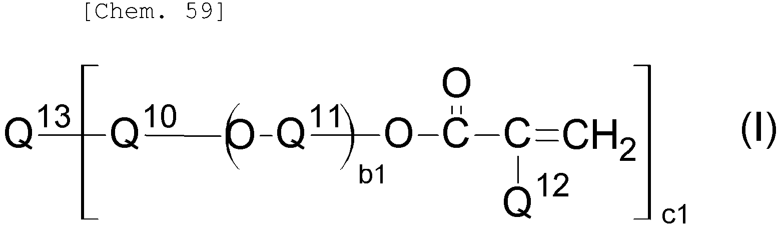 in which
   Q¹⁰ represents a linear or branched alkylene group having 1 or more and 3 or less carbon atoms;
   Q¹¹ represents a linear or branched alkylene group having 1 or more and 10 or less carbon atoms;
   Q¹² represents a hydrogen atom or a methyl group;
   Q¹³ represents an organic group having a valency of from 3 to 6, inclusive, and having 1 or more and 10 or less carbon atoms;
   a1 is 0 or 1;
   b1 is 0 or more and 15 or less; and
   c1 is 3 or more and 6 or less.
[9] The curable composition as described in [5] or [6], in which a proportion of the second radically polymerizable monomer in the curable composition is 10 mass% or more and 90 mass% or less.
[10] The curable composition as described in [7], in which a proportion of the third radically polymerizable monomer in the curable composition is 5 mass% or more and 95 mass% or less.
[11] The curable composition as described in any one of [1] to [10], in which the functional dye includes a photochromic compound.
[12] The curable composition as described in any one of [1] to [11], in which in the formula (2), Q² represents a methyl group.
[13] The curable composition as described in any one of [1] to [12], in which in the formula (2), b2 is 0.
[14] A cured product obtained by curing the curable composition as described in any one of [1] to [13].
[15] A laminate, including
   an optical substrate and
   a resin layer including the cured product as described in [14].
[16] An optical article including the cured product as described in [14].
[17] A lens including the cured product as described in [14].
[18] Eyeglasses including the lens as described in [17].
[19] The cured product as described in [14], in which a biobased plastic content according to a method in accordance with ISO standard 16620-3 is 10 mass% or more.
[20] The laminate as described in [15], in which the optical substrate has a biobased plastic content of 25 mass% or more according to a method in accordance with ISO standard 16620-3.

## Claims

1. A curable composition comprising a first radically polymerizable monomer represented by the following formula (1) and a functional dye: 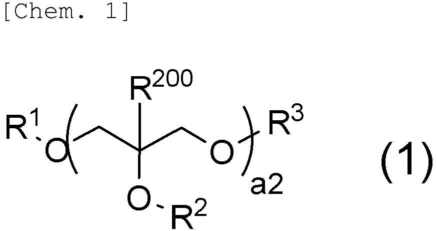 wherein
R¹ and R³ each independently represent monovalent groups represented by the following formula (2);
a2 is 1, or a number of 2 or more and 10 or less;
R²⁰⁰ represents a hydrogen atom or a methyl group;
when a2 is 1, R² represents a monovalent group represented by the following formula (2);
when a2 is 2 or more and 10 or less, R² each represents a monovalent group represented by the following formula (2) or a hydrogen atom, and at least one of the plurality of R² represents a monovalent group represented by the following formula (2);
the plurality of monovalent groups represented by the following formula (2) may be the same as or different from each other: 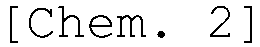 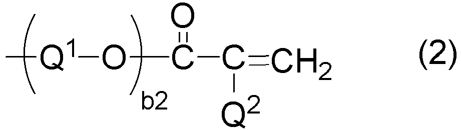 wherein
Q¹ represents a linear or branched alkylene group having 1 or more and 6 or less carbon atoms;
Q² represents a hydrogen atom or a methyl group; and
b2 is 0, or 1 or more and 15 or less.

2. The curable composition according to claim 1, wherein a proportion of the first radically polymerizable monomer in the curable composition is 5 mass% or more and 95 mass% or less.

3. The curable composition according to claim 1, wherein a proportion of the functional dye in the curable composition is 0.001 mass% or more and 10 mass% or less.

4. The curable composition according to claim 1, wherein the first radically polymerizable monomer comprises a compound represented by the following formula (1a): 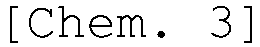 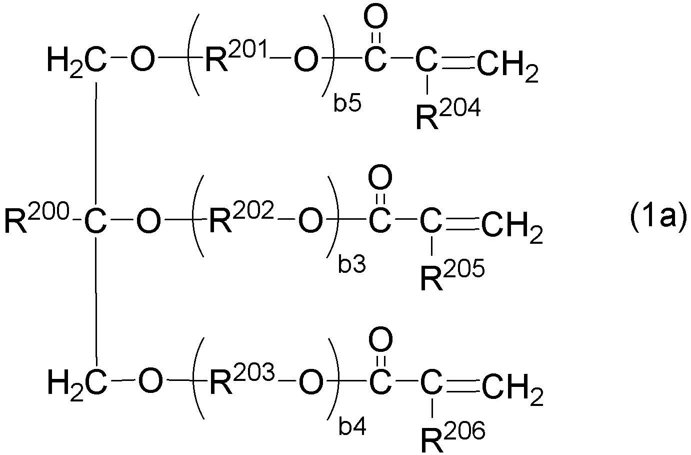 wherein
R²⁰⁰ represents a hydrogen atom or a methyl group;
R²⁰¹, R²⁰², and R²⁰³ each independently represent a linear or branched alkylene group having 1 or more and 6 or less carbon atoms;
R²⁰⁴, R²⁰⁵ and R²⁰⁶ each independently represent a hydrogen atom or a methyl group; and
b3, b4, and b5 are each independently 0, or 1 or more and 4 or less.

5. The curable composition according to claim 1, further comprising a second radically polymerizable monomer having at least one polyalkylene glycol chain structure having a number average molecular weight of 250 or more and two (meth)acryloyl groups in one molecule.

6. The curable composition according to claim 5, wherein the second radically polymerizable monomer comprises a di(meth)acrylate represented by the following formula (3): 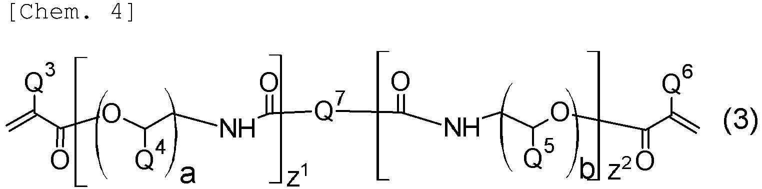 wherein
Q³ and Q⁶ each independently represent a hydrogen atom or a methyl group;
Q⁴ and Q⁵ each independently represent a hydrogen atom or an alkyl group having 1 or more and 3 or less carbon atoms;
Q⁷ represents a divalent group having a number average molecular weight of 250 or more represented by the following formula (3a);
a and b are each independently 0 or more and 10 or less; and
Z¹ and Z² are each independently 0 or 1: 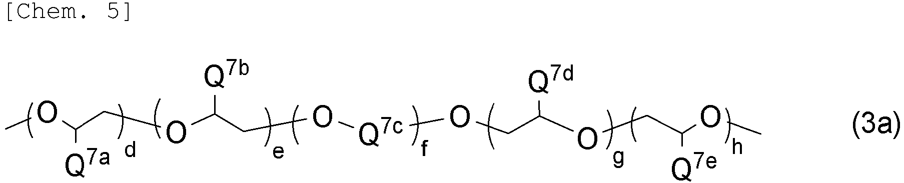 wherein
Q^{7a}, Q^{7b}, Q^{7d}, and Q^{7e} each independently represent a hydrogen atom or an alkyl group having 1 or more and 3 or less carbon atoms;
Q^{7d} and Q^{7e} are different groups from each other and Q^{7a} and Q^{7e} are different groups from each other;
Q^{7c} represents a linear or branched alkylene group having 2 or more and 20 or less carbon atoms which may have a substituent;
d and h are 0 or more and 10 or less;
e and g are 0 or more and 20 or less; and
f is 3 or more and 100 or less.

7. The curable composition according to claim 1, further comprising a third radically polymerizable monomer having 3 or more (meth)acryloyl groups in one molecule.

8. The curable composition according to claim 7, wherein the third radically polymerizable monomer comprises a polyfunctional (meth)acrylate represented by the following formula (I): 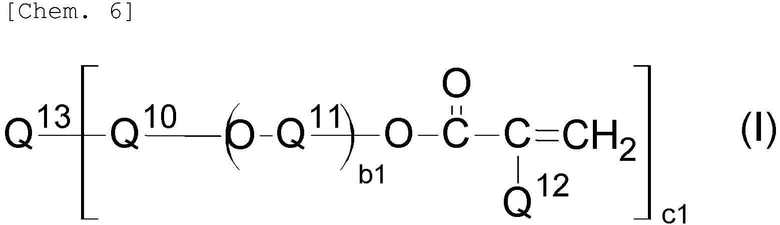 wherein
Q¹⁰ represents a linear or branched alkylene group having 1 or more and 3 or less carbon atoms;
Q¹¹ represents a linear or branched alkylene group having 1 or more and 10 or less carbon atoms;
Q¹² represents a hydrogen atom or a methyl group;
Q¹³ represents an organic group having a valency of from 3 to 6, inclusive, and having 1 or more and 10 or less carbon atoms;
a1 is 0 or 1;
b1 is 0 or more and 15 or less; and
c1 is 3 or more and 6 or less.

9. The curable composition according to claim 5, wherein a proportion of the second radically polymerizable monomer in the curable composition is 10 mass% or more and 90 mass% or less.

10. The curable composition according to claim 7, wherein a proportion of the third radically polymerizable monomer in the curable composition is 5 mass% or more and 95 mass% or less.

11. The curable composition according to claim 1, wherein the functional dye comprises a photochromic compound.

12. The curable composition according to claim 1, wherein in the formula (2), Q² represents a methyl group.

13. The curable composition according to claim 1, wherein in the formula (2), b2 is 2, 3, or 4.

14. A cured product obtained by curing the curable composition according to claim 1.

15. A laminate, comprising
an optical substrate and
a resin layer comprising the cured product according to claim 14.

16. An optical article comprising the cured product according to claim 14.

17. A lens comprising the cured product according to claim 14.

18. Eyeglasses comprising the lens according to claim 17.

19. The cured product according to claim 14, wherein a biobased plastic content according to a method in accordance with ISO standard 16620-3 is 10 mass% or more.

20. The laminate according to claim 15, wherein the optical substrate has a biobased plastic content of 25 mass% or more according to a method in accordance with ISO standard 16620-3.
